# EUROPÄISCHE PATENTSCHRIFT

(11) **EP 3 283 999 B1**
(45) Veröffentlichungstag und Bekanntmachung des Hinweises auf die Patenterteilung: **29.04.2020**
(21) Anmeldenummer: 16716220.5
(22) Anmeldetag: 14.04.2016
(51) Int. Cl.: G06F 21/33, H04L 9/08

(54) **ELEKTRONISCHES SYSTEM ZUR ERZEUGUNG EINES ZERTIFIKATS**
ELECTRONIC SYSTEM FOR PRODUCING A CERTIFICATE
SYSTÈME ÉLECTRONIQUE SERVANT À PRODUIRE UN CERTIFICAT

(30) Priorität: 17.04.2015 DE 102015207064
(43) Veröffentlichungstag der Anmeldung: 21.02.2018
(73) Patentinhaber: Bundesdruckerei GmbH, 10969 Berlin (DE)
(72) Erfinder: WOLF, Andreas, 07743 Jena (DE)
(74) Vertreter: Richardt Patentanwälte PartG mbB
(86) Internationale Anmeldenummer: PCT/EP2016/058191
(87) Internationale Veröffentlichungsnummer: WO 2016/166194

(56) Entgegenhaltungen:
- TUECKE ANL V WELCH NCSA D ENGERT ANL L PEARLMAN USC/ISI M THOMPSON LBNL S: "Internet X.509 Public Key Infrastructure (PKI) Proxy Certificate Profile; rfc3820.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. Juni 2004 (2004-06-01), XP015009598, ISSN: 0000-0003
- Glenn Pittaway: "Smart Card Concepts", , 17. März 2013 (2013-03-17), XP055280925, Gefunden im Internet: URL:https://web.archive.org/web/2013031706 1702/http://technet.microsoft.com/en-us/li brary/dd277376.aspx [gefunden am 2016-06-16]

## Beschreibung

Die Erfindung betrifft ein Verfahren zur Erzeugung eines von einem ersten Zertifikat einer Dokumenten-PKI abgeleiteten zweiten Zertifikats sowie ein entsprechendes elektronisches System.

Aus dem Stand der Technik sind verschiedene Verfahren zur Signatur elektronischer Datensätze bekannt. Eine solche Signatur dient im Allgemeinen dazu den Inhalt eines signierten Datensatzes zu bestätigen. Insbesondere dient eine Signatur mit einem rechtsverbindlichen Zertifikat dazu dem signierten Datensatz einen rechtsverbindlichen Charakter zuzuweisen. Zu diesem Zweck lässt sich ein Nutzer beispielsweise von einer Zertifizierungsstelle, die zur Ausstellung rechtsverbindlicher Zertifikate berechtigt ist, ein digitales Zertifikat und ein asymmetrisches Schlüsselpaar zum Signieren elektronischer Datensätze zuteilen.

Aus dem Stand der Technik ist beispielsweise die Verwendung von elektronischen Pässen zur elektronischen Identifizierung, Authentifizierung und andern "Trust-Services" bekannt (vergleiche Technical Guideline TR-03110-2, "Advanced Security Mechanisms for Machine-Readable Travel Documents and elDAS Token - Part 2 - Protocols for Electronic IDentification, Authentication and Trust Services (elDAS)", Version 2.20 beta2, 11. März 2014, Bundesamt für Sicherheit in der Informationstechnik, ANSSI).

Tanenbaum, A.S., et al: "Distributed Systems - Principles and Paradigms",2nd Edition, Pearson Prentice Hall 2007, Kapitel 9, S. 377-442, beschreibt bekannte Sicherheitsmaßnahmen für verteilte Systeme.

Die DE 10 2012 017 826 A1 beschreibt ein Verfahren zur Erstellung einer von einem Originaldatenträger abgeleiteten Authentisierungsinstanz, wobei der Originaldatenträger ein für den Originaldatenträger individuelles Schlüsselpaar, welches einen öffentlichen Schlüssel und einen geheimen Schlüssel des Originaldatenträgers umfasst, sowie ein Zertifikat über den öffentlichen Schlüssel des Originaldatenträgers aufweist.

Tuecke, S., et al.: "Internet X.509 Public Key Infrastructure (PKI) - Proxy Certificate Profile", Network Working Group, Request for Comments: 3820, Juni 2004, S. 1-37, beschreibt ein Zertifikatprofil für Proxy-Zertifikate basierend auf X.509 Public Key Infrastructure (PKI) Zertifikaten, wie in RFC 3280 definiert, für eine Verwendung im Internet. Der Begriff Proxy-Zertifikat wird dabei verwendet, um ein Zertifikat zu beschreiben, welches abgeleitet von und signiert durch ein normales X.509 Public Key End Entity Zertifikat ist oder ein anderes Proxy-Zertifikat zu dem Zweck, ein beschränktes Vertreten und Delegieren innerhalb eines auf einer PKI basierenden Authentifizierungssystems bereitzustellen.

Der Erfindung liegt die Aufgabe zugrunde, ein Verfahren zur Erzeugung eines von einem ersten Zertifikat einer Dokumenten-PKI abgeleiteten zweiten Zertifikats zu schaffen sowie ein entsprechendes elektronisches System.

Die der Erfindung zugrunde liegende Aufgabe wird mit den Merkmalen der unabhängigen Patentansprüche gelöst. Ausführungsformen der Erfindung sind in den abhängigen Patentansprüchen angegeben.

Unter einem "Zertifikat" wird hier ein Zertifikat einer Public-Key-Infrastructure (PKI) verstanden, beispielsweise nach dem Standard X.509 oder ein Card Verifiable Certificate (CVC) (vergleiche ISO 7816 - Teil 8). Ein Zertifikat ist ein digitaler Datensatz, der einen öffentlichen Schlüssel beinhaltet und signiert ist.

Digitale Zertifikate sind bei der Absicherung elektronischer Kommunikation durch asymmetrische kryptographische Verfahren ein bewährtes Mittel um die Echtheit und die Zuordnung der kryptographischen Mittel zu einer bestimmten Person nachzuweisen. Zertifikate sind strukturierte Daten, die die Authentizität und/oder weitere Eigenschaften des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen. Ein Zertifikat kann einer elektronischen Signatur zum Beispiel zugeordnet werden, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen. Je nach Sicherheitsgrad des verwendeten Kryptosystems kann eine elektronische Signatur deshalb auch zum Abschließen rechtsverbindlicher Verträge genutzt werden.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Digitale Signaturen werden zur sicheren Abwicklung von Geschäften im Internet eingesetzt und ermöglichen die Prüfung der Identität der Vertragspartner und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Mit einer Signatur versehene elektronische Daten erlauben es also, den Urheber bzw. die Person, die die Signatur dieser Daten erstellt hat, eindeutig zu identifizieren und die Integrität der signierten elektronischen Informationen, d.h. deren Unverfälschtheit durch Dritte, zu prüfen. Eine "qualifizierte elektronische Signatur" ist eine Signatur welche gemäß den rechtlichen Regelungen innerhalb eines Rechtsgebietes, in Deutschland beispielsweise entsprechend der in Paragraph 2 Nummer 3 Signaturgesetz getroffenen Regelungen, die vorgeschriebenen Anforderungen an ihre elektronische Form erfüllt und dadurch geeignet ist, die gesetzlich für manche Transaktionsformen vorgeschriebene Schriftform zu ersetzen. Die Begriffe "elektronische Signatur" beziehungsweise "qualifizierte elektronische Signatur" sind rein rechtlicher Natur. In der Praxis und auch in der vorliegenden Beschreibung der Erfindung werden diese Begriffe jedoch als Synonyme zu dem rein technischen Begriff der "digitalen Signatur" verwendet.

Unter einer "Dokumenten-PKI" wird hier eine Public Key Infrastructure (PKI) verstanden, die zur Erstellung von Zertifikaten für Dokumente dient, wobei die Zertifikate zur Prüfung der Authentizität des betreffenden Dokuments verwendet werden, beispielsweise wie in der technischen Richtlinie TR-03127, "Architektur elektronischer Personalausweis und elektronischer Aufenthaltstitel", Version 1.15, 1. August 2012, Bundesamt für Sicherheit in der Informationstechnik, spezifiziert, vergleiche insbesondere Seite 27 unter 5.1.

Unter einem "nichtflüchtigen elektronischen Speicher" wird hier ein Speicher zur dauerhaften Speicherung von Daten, insbesondere von Attributen und Identifikatoren, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein solcher nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, insbesondere von Attributen und Identifikatoren, verstanden, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Speicherbereich verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Es ist insbesondere kein direkter Zugriff über eine Kommunikationsschnittstelle des den Speicher aufweisenden Geräts möglich.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einem "Attribut" wird hier eine Information betreffend den Verwendungszweck des zugehörigen Zertifikats bezeichnet, wie zum Beispiel eine Information betreffend den zulässigen Inhalt eines Datensatzes, dessen Echtheit mit dem Zertifikat bestätigt werden soll. Weist ein Datensatz einen Inhalt auf, der einem der Attribute des zum Signieren verwendeten Zertifikats wiederspricht, so ist die Signatur ungültig, d.h. diese Signatur wird nicht von der das Zertifikat ausstellenden Stelle bestätigt. Solche Attribute können beispielsweise eine allgemeine Definition oder detaillierte Auflistung der mit dem Zertifikat rechtsverbindlich signierbaren Datensätze sein, ebenso wie im Falle einer mit dem Zertifikat zu signierenden Bestellung ein maximaler Geldbetrag, ein Dienstleister, eine Ware oder eine Dienstleistung.

Unter einem "Identifikator" wird hier eine die Identität des Nutzers betreffende Information verstanden, die den Nutzer charakterisiert, dem das erste Zertifikat zugewiesen ist, und aus der sich die Identität des Nutzers zumindest teilweise erschließen lässt. Identifikatoren können beispielsweise Vorname, Nachname, Mädchenname, Anschriften, Nationalitäten, Geschlecht, Geburtsdatum oder Angaben zu physischen Merkmalen des Nutzers sein.

Ein solcher Identifikator, ebenso wie der erste private Schlüssel, kann in das erste Gerät anlässlich der Produktion des Geräts durch eine Personalisierungsanlage gespeichert werden. Alternativ kann ein Identifikator oder der erste private Schlüssel nachträglich in das erste Gerät eingebracht werden, nachdem ein Nutzer bereits das erste Gerät in Benutzung genommen hat. So kann beispielsweise ein Identifikator nachgeladen werden.

Unter einer "Attributspezifikation" oder "Attribute Request" (AR) wird hier eine Beschreibung von denjenigen Attributen und Identifikatoren verstanden, die zum Beispiel von einem Dienst-Computersystem zur Erbringung eines Dienstes benötigt werden. Die Attribute und Identifikatoren können über Feldnamen von Datenfeldern identifiziert werden, in denen die jeweiligen Attribut- oder Indentifikatorwerte gespeichert sind, und/oder über ein semantisches Netz, d.h. eine Konvention, wie Attribute und Identifikatoren systemübergreifend bezeichnet werden.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos ausgebildet sein kann, beispielsweise nach einem RFID- und/oder NFC-Standard.

Aus dem Stand der Technik bekannte elektronische Zertifikate zur Erstellung elektronischer Signaturen, insbesondere qualifizierter elektronischer Signaturen, sind allgemein, d.h. ohne Einschränkungen der Verwendungsmöglichkeiten, und über einen langen Zeitraum hinweg gültig. Aufgrund seiner nahezu uneingeschränkten Gültigkeit erlegt ein solches Zertifikat einer Vielzahl von Personen und (möglichen) Nutzern aus deren subjektiver Sicht eine als zu hoch empfundene Verantwortung für zu wenig Nutzen auf, insbesondere da ein solches Zertifikat physisch nicht fassbar ist. Dies betrifft insbesondere, aber nicht ausschließlich, wenig technik-affine Personen. Beispielweise ist nach dem deutschen Signaturgesetz eine qualifizierte elektronische Signatur (QES) eine fortgeschrittene elektronische Signatur, die auf einem (zum Zeitpunkt ihrer Erzeugung gültigen) qualifizierten Zertifikat beruht und mit einer sicheren Signaturerstellungseinheit (SSEE) erstellt wurde. Da eine qualifizierte elektronische Signatur für den Nutzer, dem diese Signatur zugeordnet ist, rechtsverbindlich ist, besteht ein hohes Missbrauchspotenzial. Beispielsweise könnten die technischen Mittel zur Signierung, wie etwa ein privater Signaturschlüssel, in die falschen Hände geraten. Führt der Nutzer nur sehr selten elektronische Transaktionen durch, für welche eine elektronische Signatur erforderlich ist, beispielsweise die Aufnahme eines Kredits über das Internet, eine online-basierte Einreichung der jährlichen Steuererklärung oder dergleichen, so ist die Missbrauchsgefahr im Verhältnis zum Nutzen einer qualifizierten elektronischen Signatur für diesen oftmals zu hoch.

Heute könnte zwar theoretisch eine Vielzahl rechtsverbindlicher Geschäfte mittels einer qualifizierten elektronischen Signatur durchgeführt werden, in der Praxis ziehen allerdings viele Nutzer nach wie vor den Postweg oder ein persönliches Erscheinen vor Ort für die Abwicklung dieser Geschäfte vor. Dies mag wohl im Wesentlichen daran liegen, dass vielen möglichen Nutzern die Verwendung einer elektronischen Signatur, insbesondere einer qualifizierten elektronischen Signatur, zu unsicher und/oder technisch zu aufwändig erscheint. Viele Personen sind nicht bereit, sich langfristige gültige oder permanente Zertifikate für ein oder mehrere Signaturschlüsselpaare zuordnen zu lassen, da sie damit langfristig Verantwortung für die sichere Aufbewahrung der Schlüssel und für die Geheimhaltung zugehöriger PINs oder Passwörtern übernehmen müssten. Im Falle einer missbräuchlichen Nutzung dieser Schlüssel und PINs, wird diese Nutzung zunächst dem zugeordneten Nutzer zugerechnet, in dessen Pflichtenkreis die sichere Verwahrung dieser Schlüssel und PINs fällt. Diese Zurechnung gilt solange, bis zweifelsfrei das Gegenteil nachgewiesen wurde (Prinzip der Beweislastumkehr).

Ausführungsformen der Erfindung sind besonders vorteilhaft, da es dem Nutzer ermöglicht wird, ein abgeleitetes zweckgebundenes Zertifikat zu erzeugen, und zwar ohne Einschaltung eines elD-Provider-Computersystems und auch ohne das Erfordernis einer Netzwerkverbindung. Der Nutzer kann also selbst dann, wenn keine Netzwerkverbindung zur Verfügung steht autark und dennoch ohne Einschränkung hinsichtlich der Sicherheit und der Vertrauenswürdigkeit ein Zertifikat mithilfe des erfindungsgemäßen Systems zur Erzeugung von Zertifikaten erstellen. Dies hat den weiteren Vorteil der Stärkung des Datenschutzes und der informationellen Selbstbestimmung des Nutzers, da keinerlei Daten des Nutzers für die Erzeugung des Zertifikats über ein Netzwerk übertragen werden müssen und auch keine hoheitliche Institution oder ein sonstiger Dritter hierzu involviert werden müssen.

Des Weiteren sind Ausführungsformen der Erfindung vorteilhaft, da sie es dem Nutzer erlauben, anwendungsspezifische zweckgebundene Zertifikate zu erstellen. Der Nutzer ist damit nicht mehr darauf angewiesen, auf allgemeingültige, nicht limitierte Zertifikate zurückgreifen zu müssen, welche missbrauchsanfällig sind und deren Verlust und/oder unberechtigte Verwendung für den Zertifikatsinhaber schwerwiegende Folgen haben können. Hierdurch wird insbesondere die psychologische Hemmschwelle bei der Verwendung neuer Techniken herabgesetzt, da der Nutzer durch die Festlegung einer Zeitangabe, insbesondere eines kurzen Gültigkeitszeitraums, die Festlegung limitierender Attribute und die Auswahl von Identifikatoren, die den berechtigten Nutzer des Zertifikats kennzeichnen, mögliche Anwendungsfelder des Zertifikats derart präzise einschränken kann, dass ein Missbrauch gar nicht erst möglich oder aber nur mit einem äußerst geringen Schadensrisiko verbunden ist.

Hierbei ist insbesondere die zumindest logische, vorteilhafterweise auch physische Trennung des abgeleiteten Zertifikats, d.h. des zweiten Zertifikats, von dem Ursprungszertifikat, dem ersten Zertifikat, von Vorteil. So kann der Nutzer das Ursprungszertifikat an einem sicheren Ort, beispielsweise einem Safe, sicher verwahren, während er das oder die abgeleiteten Zertifikate im Alltag mit sich führt, ohne dazu gezwungen zu sein, übermäßig auf deren Sicherheit zu achten.

Schließlich haben erfindungsgemäße Ausführungsformen den Vorteil, dass die abgeleiteten Zertifikate, aufgrund des deutlich niedrigeren Schadenrisikos, im Allgemeinen niedrigere Sicherheitsstandards erforderlich machen. Hierdurch wird nicht nur der Umgang mit den Zertifikaten für den technisch weniger versierten Nutzer erleichtert, sondern auch aufgrund der geringeren technischen Sicherheitsanforderungen die angewendete technologische Infrastruktur vereinfacht und damit kostengünstiger.

Dies zeigt sich insbesondere am Umgang mit dem dem abgeleiteten zweiten Zertifikat zugeordneten zweiten privaten Schlüssel. Dieser wird nach der Erzeugung insbesondere in Umgebungen eingebracht und verwendet, die nur vergleichsweise niedrige Sicherheitsstandards erfüllen, beispielsweise keinen geschützten Speicherbereich aufweisen, auf den ein Zugriff nur über einen entsprechenden Prozessor möglich ist und in den keine Programme eingebracht bzw. nachträglich installiert werden können. Dies geschieht jedoch ohne Einfluss auf den für die Sicherheit hochsensiblen ersten privaten Schlüssel.

Der Nutzer kann ein so erzeugtes und in seinen Verwendungsmöglichkeiten effektiv eingeschränktes zweite Zertifikat beispielsweise von dem zweiten Gerät auch auf ein weiteres Nutzer-Computersystem übertragen und zur Inanspruchnahme von Dienstleistungen per Internet verwenden.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet-PC oder ein Mobilfunkgerät, insbesondere ein Smartphone, mit einem üblichen Internetbrowser, wie zum Beispiel Microsoft Internet Explorer®, Safari®, Google Chrome®, Firefox® oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden. Nach Ausführungsformen der vorliegenden Erfindung ist beispielsweise das zweite Gerät als ein "Nutzer-Computersystem" konfiguriert. Hierfür weist das zweite Gerät insbesondere eine Schnittstelle zur Verbindung mit dem Netzwerk auf.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver handeln, welcher dazu dient eine eCommerce- oder eGovernment-Anwendung zur Verfügung zu stellen, insbesondere einen Onlineshop oder einen Behördenserver. Unter einem "Dienst-Computersystem" wird zudem auch ein Computersystem verstanden, welches über eine Schnittstelle für einen direkte Verbindung, beispielsweise per RFID- und/oder NFC-Standard, verfügt.

Der Nutzer sendet eine Dienstanforderung von dem Nutzer-Computersystem über ein Netzwerk, insbesondere ein öffentliches Netzwerk wie das Internet, an ein Dienst-Computersystem, welches mit einem ID-Provider-Computersystem gekoppelt ist. Hierzu gibt der Nutzer beispielsweise eine URL in einen Internetbrowser seines Nutzer-Computersystems ein, um eine sogenannte Internetsession mit dem Dienst-Computersystem aufzubauen.

Bei dem Dienst-Computersystem kann es sich zum Beispiel um einen Onlineshop oder ein anderes eCommerce-Portal oder einen Behördenserver, der eine eGovernment-Anwendung zur Verfügung stellt, handeln. Bei der Dienstanforderung des Nutzers kann es sich um die Übertragung einer Kaufentscheidung des Nutzers handeln, die der Nutzer zum Beispiel durch Anklicken eines virtuellen Bedienelements auf der Webseite des Dienst-Computersystems, wie zum Beispiel "Kaufen" oder "buy now" eingibt, wobei diese Dienstanforderung zum Beispiel als http-Request oder https-Request über die Internetsession an das Dienst-Computersystem übertragen werden kann. Bei einer eGovernment-Anwendung kann es sich analog dazu bei der Dienstanforderung um die Übertragung einer Anforderung des Nutzers eines behördlichen Vorgangs, wie zum Beispiel die Ausstellung einer Meldebescheinigung, die Anmeldung eines Kraftfahrzeugs oder die Meldung einer Wohnortänderung oder dergleichen handeln.

Ebenso kann eine Dienstanforderung abhängig von der Ausgestaltung des Dienst-Computersystems auch direkt über eine dafür konfigurierte Schnittstelle, wie etwa RFID- und/oder NFC-Standard, erfolgen.

Das Dienst-Computersystem benötigt für die Erbringung des mit der Dienstanforderung angeforderten Dienstes Identifikatoren des Nutzers. Beispielsweise können die benötigten Identifikatoren Name, Geburtsdatum, Anschrift des Nutzers, Kontonummer des Nutzers beinhalten. Darüber hinaus können weiter Attribute zur Abwicklung der Dienstanforderung notwendig sein, wie etwa Kreditwürdigkeit des Nutzers, und eine Zeitangabe wie etwa eine Gültigkeitsdauer des verwendeten Zertifikats. Diese zur Erbringung des Dienstes von Seiten des Dienst-Computersystems verlangten Angaben werden dem Nutzer beispielsweise durch eine entsprechende Attributspezifikation mittgeteilt, welche die entsprechenden Angaben auflistet.

Mit einem erfindungsgemäßen Verfahren und einem entsprechenden System wird es dem Nutzer ermöglicht ein zweckgebundenes abgeleitetes Zertifikat zu erstellen, welches nicht nur die notwendigen Informationen zur Inanspruchnahme eines Dienstes aufweist, sondern darüber hinaus auch effektiv einem möglichen Missbrauch entgegenwirkt. Neben den Seiten des Dienst-Computersystems nachgefragten Identifikatoren, Attributen und Zeitangaben kann der Nutzer das abgeleitete Zertifikat mit weiteren Attributen versehen, welche die Verwendungsmöglichkeiten des Zertifikats einschränken.

Nach Ausführungsformen der Erfindung muss sich der Nutzer vor der Nutzung gegenüber dem ersten und/oder zweiten Gerät authentisieren. Nach bevorzugten Ausführungsformen der Erfindung authentisiert sich ein Nutzer dadurch als berechtigt, dass er die Kenntnis eines bestimmten Authentisierungsdatums, zum Beispiel eines Passwortes oder einer PIN, nachweist. Je nach Ausführungsform kann das erste und/oder zweite Gerät eine Mindestlänge beziehungsweise Mindestkomplexität für das Passwort oder die PIN vorsehen. Der Nutzer hat die Authentisierungsdaten so zu verwalten, dass er alleine die Authentisierungsdaten kennt. Nach weiteren Ausführungsformen wird das ersten und/oder zweite Gerät mit einer Initialen Transport PIN ausgestattet, welche von dem Nutzer vor dem ersten Gebrauch des ersten und/oder zweiten Geräts zur Signierung elektronischer Dokumente durch eine operationelle Signatur-PIN ersetzt werden muss.

Nach weiteren Ausführungsformen der Erfindung kann die Sicherheit der Authentifizierung des Nutzers bei dem ersten und/oder zweiten Gerät durch Verwendung weiterer Sicherheitsmerkmale erhöht werden. So kann zur Authentifizierung des Nutzers bei dem ersten und/oder zweiten Gerät zum Beispiel die Verwendung biometrischer Merkmale, zum Beispiel eines Fingerabdrucks des Nutzers, eine für jeden Nutzer spezifische Tastenanschlagfrequenz, ein Iris-Bild, ein Handvenenmuster oder dergleichen erforderlich sein. Gemäß weiteren Ausführungsformen kann die Authentifizierung eines Nutzers bei dem ersten und/oder zweiten Gerät die Eingabe einer so genannten "Card Access Number" (CAN) erfordern, welche den Nutzer als unmittelbaren Besitzer des ersten und/oder zweiten Geräts ausweist.

Welche Authentisierungsdaten für eine bestimmte Ausführungsform der Erfindung im Einzelnen erforderlich sind hängt von den Sicherheitsanforderungen des jeweiligen Geräts ab.

Zur Authentisierung gegenüber dem ersten und/oder zweiten Gerät gibt der Nutzer in einer Ausführungsform eine geheime Kennung, wie zum Beispiel die sogenannte Personal Identification Number (PIN) ein. Dies kann je nach Ausführungsform unmittelbar durch Eingabe in die Eingabevorrichtung des ersten oder zweiten Geräts erfolgen. Nach einer Ausführungsform erfolgt die Authentifizierung des Nutzers beispielsweise gegenüber dem ersten Gerät mittels einer "Fernüberprüfung", worunter hier jedes Verfahren verstanden wird, bei dem die zu überprüfende Kennung nicht in den erste Gerät unmittelbar eingegeben wird, um sie mit der dort gespeicherten Kennung zu vergleichen, sondern bei dem die Überprüfung mittels eines beide Geräte involvierenden Protokolls erfolgt, bei dem die Kennung, die in das zweite Gerät eingegeben wird, nicht an das erste Gerät übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.htmt ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1. In einer Ausführungsform authentisiert sich neben dem Nutzer auch das zweite Gerät gegenüber dem ersten Gerät, wobei ein gesicherter Übertragungskanal, das heißt ein sogenannter Secure Messaging-Kanal, zwischen dem ersten und zweiten Gerät aufgebaut werden kann, beispielsweise indem ein Session Key nach einem Diffie-Hellman-Protokoll zwischen dem ersten und zweiten Gerät vereinbart wird.

Nach einer Ausführungsform erfolgt die Speicherung des mindestens einen Attributs und der Zeitangabe sowie des erzeugten zweiten kryptographischen Schlüsselpaars und des zweiten Zertifikats auf einem nichtflüchtigen elektronischen Speicher des ersten und/oder zweiten Geräts. Nach einer Ausführungsform hat das erste und/oder zweite Gerät zusätzlich zu dem nichtflüchtigen elektronischen Speicher einen flüchtigen elektronischen Speicher, wie zum Beispiel ein RAM oder einen Arbeitsspeicher des Prozessors. Auf diesem flüchtigen elektronischen Speicher werden beispielsweise festgelegte Attribute und Zeitangabe, Auswahlsignale sowie das erzeugte kryptographische Schlüsselpaare, Datensätze und/oder das zweite Zertifikat zwischengespeichert. Insbesondere werden diese Daten bei ihrer Erstellung auf diesem flüchtigen elektronischen Speicher zwischengespeichert, bevor sie an das erste und/oder zweite Gerät oder ein Nutzer-Computersystem weiter übertragen werden.

Nach einer bevorzugten Ausführungsform der Erfindung enthält ein elektronisches Zertifikat Angaben zur Gültigkeit des Zertifikats bzw. zur Gültigkeit eines zugeordneten öffentlichen Schlüssels, welcher vorzugsweise Bestandteil des Zertifikats ist. Besagter öffentlicher Schlüssel bildet zusammen mit einem privaten Schlüssel ein asymmetrisches Schlüsselpaar. Der private Schlüssel dient zur Verschlüsselung von Daten, z.B. Daten eines elektronischen Dokumentes, oder der Verschlüsselung von abgeleiteten Daten eines elektronischen Dokumentes, z.B. eines Hash-Wertes des elektronischen Dokumentes. Durch Verschlüsselung besagter Daten eines elektronischen Dokumentes mit dem privaten Schlüssel wird das elektronische Dokument signiert. Ein einem signierten elektronischen Dokument zugehöriges bzw. zugeordnetes Zertifikat ist dabei ein Zertifikat, welches die Gültigkeit eines privaten Schlüssels bestätigt, mit welchem das elektronische Dokument signiert wurde.

Ein vorteilhafter Aspekt von Ausführungsformen der vorliegenden Erfindung ist die Ermöglichung einer flexiblen, anlassbezogenen Ausstellung und Nutzung elektronischer Zertifikate. Die damit einhergehende Einschränkung der Gültigkeit von für Signaturzwecke verwendeten Zertifikaten reduziert die Gefahr des Missbrauchs von elektronischen Signaturen, da diese gemäß Ausführungsformen der Erfindung immer nur für bestimmte Anlässe, Zeiträume, Vertragstypen, beziehungsweise nur für ein einzigen elektronischen Datensatz bzw. eine einzige Transaktion gültig sind.

Unter einer "Transaktion" wird im Folgenden ein Datenverarbeitungsschritt verstanden, welcher durch ein computer-basiertes System oder Gerät nach Erhalt einer Transaktionsanforderung durchgeführt wird. Der Datenverarbeitungsschritt kann z.B. ein technischer Steuerungs- oder Regelungsschritt sein. Eine Transaktion kann z.B. der Initiation eines Schaltvorgangs oder eines aus mehreren Schaltvorgängen bestehenden Schaltprozesses sein. Eine Transaktion kann auch ein Datenverarbeitungsprozess zur Verarbeitung technischer, medizinischer, finanzbezogener, logistischer oder sonstiger Daten sein. Eine Transaktion kann dabei aus einem einzigen Datenverarbeitungsschritt bestehen oder einer Reihe von Schritten, die in Ihrer Gesamtheit einen bestimmten Effekt bewirken, z.B. die Verarbeitung von Daten zur Berechnung eines Ergebnisses und/oder eine physikalisch messbare Zustandsänderung an dem computer-basiertes System oder Gerät. Eine Transaktion kann z.B. ein Steuerungsprozess oder Regelungsprozess, wie er in der Hauselektronik vorkommt (Steuerung der Hausbeleuchtung, der Jalousien, der Heizung etc.), oder die Abwicklung eines Geschäftes, z.B. eines rechtsverbindlichen Geschäftes zur Einrichtung eines Girokontos. Gemäß weiteren Ausführungsformen kann es sich bei einer Transaktion auch um eine Datenbanktransaktion handeln.

Eine "Transaktionsanforderung" ist eine Anforderung zur Durchführung einer Transaktion. Eine Transaktionsanforderung kann insbesondere eine auf elektronischem Wege übermittelte Anforderung zur Durchführung einer Transaktion sein, z.B. ein HTTP-Request, eine E-Mail, der Aufruf eines Webservice, Remote Procedure Calls etc. Eine Transaktionsanforderung kann auf verschiedenen technischen Protokollen zur Datenübertragung und/oder zur Initiation von Programmfunktionen auf einem entfernten computer-basierten System beruhen, wobei die Instanz, welche die Transaktionsanforderung aussendet, nicht identisch ist mit derjenigen Instanz, die angeforderte Transaktion durchführt. Die Übertragung der Transaktionsanforderung vom Sender an den Empfänger kann beispielsweise über das Internet, Bluetooth, RFID, NFC, eine Infrarotschnittstelle etc. erfolgen. Eine Transaktionsanforderung kann insbesondere eine auf elektronischem Wege übermittelte Anforderung zur Übertragung von Informationen oder eine Anforderung der Lieferung von Gütern oder eine Anforderung der Erbringung einer Dienstleistung sein.

Eine "Dienstanforderung" ist eine Anforderung zur Durchführung eines Datenverarbeitungsschrittes, wobei die Dienstanforderung durch die gleiche Instanz, die auch die Transaktionsanforderung generiert, erstellt wird, und wobei die Dienstanforderung an die gleiche Zielinstanz wie die Transaktionsanforderung gerichtet ist. Die Dienstanforderung ist dabei der Transaktionsanforderung zugeordnet und bewirkt das Auslesen der vom Nutzer bereitgestellten Zeitangaben, Identifikatoren und Attributen und deren Übermittlung an den Dienstanbieter.

Die Zuordnung einer Dienstanforderung zu einer Transaktionsanforderung bedeutet, dass die Dienstanforderung Bestandteil der Transaktionsanforderung sein kann. Alternativ kann die Dienstanforderung der Transaktionsanforderung vorausgehen, wobei die erfolgreiche Erbringung des angeforderten Dienstes notwendig für die Ausführung der Transaktionsanforderung sein kann. Eine Dienstanforderung kann auch der zugehörigen Transaktion nachgelagert sein, und die erfolgreiche Durchführung der angeforderten Transaktion kann für die Erstellung der Dienstanforderung erforderlich sein.

Gemäß bevorzugter Ausführungsformen der vorliegenden Erfindung erstellt sich der Nutzer anlassabhängig ein oder mehrere von einem nicht-zweckgebundenen allgemeinen ersten Zertifikat abgeleitete zweckgebundene zweite Zertifikate. Diese abgeleiteten Zertifikate sind also in ihrer Gültigkeit begrenzt. Ein abgeleitetes Zertifikat ist zum Beispiel nur für wenige Tage, nur für ein elektronisches Dokument oder wenige elektronische Dokumente, oder nur für einen bestimmten Dienstanbieter wie zum Beispiel ein Kaufhaus oder eine bestimmte Bank, gültig. Gemäß weiterer Ausführungsformen der Erfindung gilt das für Signaturzwecke ausgestellte Zertifikat nur für ein einziges Dokument beziehungsweise eine einzige Transaktion, nur für die Durchführung eines einmaligen Schaltprozesses, z.B. das Anschalten der Heizung oder der Öffnung einer Sicherheitstür, etc. Der Nutzer, dem ein solches in seiner Gültigkeit begrenztes zweites Zertifikat zugeordnet ist muss also nicht jahrelang auf das ihm zugeordnete Zertifikat beziehungsweise die zugehörigen Signaturschlüssel aufpassen, da besagtes Zertifikat nach einem bestimmten vom Nutzer frei wählbaren Zeitraum seine Gültigkeit verliert oder ohnehin nur für eine einzige Transaktion beziehungsweise ein im Zuge dieser Transaktion zu signierendes elektronisches Dokument Gültigkeit besitzt.

Der Nutzer muss sich also nach Abschluss der Transaktion über den Verbleib seiner Signaturschlüssel beziehungsweise des Speichermediums, auf welchem diese gespeichert sind, keine Sorgen machen. Dadurch können neue Nutzerkreise für digitale Zertifikate und die elektronischer Form der Transaktionsabwicklung gewonnen werden. Die technische Entwicklung im Bereich elektronischer Transaktionen wird beschleunigt, Verwaltungsaufwand und Kosten, die im Zusammenhang mit elektronischen Transaktionen entstehen, werden reduziert, und die Sicherheit vor dem Missbrauch elektronischer Zertifikate und zugehöriger Signaturschlüssel wird deutlich erhöht.

Nach Ausführungsformen der Erfindung weist das erste und/oder zweite Gerät eine eigene Energieversorgung auf, insbesondere eine Primärbatterie. Nach einer Ausführungsform verfügt das Gerät über einen eigenen Zeitgeber zum Erfassen einer Eingabezeit bzw. eines Ausstelldatum gegebenenfalls mit Uhrzeit zum Festlegen und Limitieren der Gültigkeitsdauer des abgeleiteten Zertifikats.

Durch Verwendung geeigneter kryptographischer Algorithmen zur Erzeugung des asymmetrischen Schlüsselpaares wird eine Rekonstruktion des privaten Schlüssels aus dem öffentlichen Schlüssel oder aus dem verschlüsselten beziehungsweise signierten elektronischen Dokument ausgeschlossen. Die Algorithmen zur Erzeugung des asymmetrischen Schlüsselpaares sind in Abhängigkeit von der Ausführungsform auf dem ersten oder zweiten Gerät gespeichert und können von dem ersten oder zweiten Prozessor des ersten oder zweiten Geräts ausgeführt werden.

Als Verschlüsselungsalgorithmen können zum Beispiel RSA Verfahren, Rabin- und Elgamal-Kryptosysteme oder auf elliptischen Kurven basierende kryptographische Algorithmen Verwendung finden.

Gemäß weiterer Ausführungsformen der Erfindung kann die Gesamtzahl der von dem ersten Zertifikat ableitbaren zweiten Zertifikate und/oder die Gesamtzahl der auf dem zweiten Gerät gespeicherten abgeleiteten zweiten Zertifikate und der zugehörigen zweiten privaten Schlüssel werkseitig oder durch den Nutzer auf eine bestimmte Zahl begrenzt werden.

In einer Ausführungsform umfasst ein erfindungsgemäßes Verfahren zum Prüfen einer mit einem abgeleiteten Zertifikat erstellten Signatur, wobei das abgeleitete Zertifikat mit einem erfindungsgemäßen Verfahren erzeugt wurde, folgende Schritte:
- Prüfen, ob ein Datensatz mit dem abgeleiteten zweiten Zertifikat signiert wurde,
- Prüfen der Gültigkeit der Zeitangabe, der Indentifikatoren und der Attribute des zweiten Zertifikats für den signierten Datensatz,
- Prüfen, ob das zweite Zertifikat mit dem ersten Zertifikat signiert wurde,
- Prüfen der Gültigkeit des ersten Zertifikats für die Zeitangabe, Indentifikatoren und Attribute des zweiten Zertifikats,
- Prüfen der Gültigkeit des ersten Zertifikats anhand von dessen Dokumenten-PKI.

Nach Empfang eines mit dem zweiten privaten Schlüssel signierten Datensatzes, wie etwa einer Bestellung, und ggf. des zugehörigen zweiten Zertifikats mit dem zweiten öffentlichen Schlüssel hat ein empfangendes Dienst-Computersystem die Möglichkeit, die Authentizität und Validität der Signatur der empfangenen signierten Datensatzes zu überprüfen.

Hierzu sendet das Dienst-Computersystem beispielsweise eine Anfrage zur Überprüfung der Gültigkeit des einem ersten öffentlichen Schlüssel zugeordneten ersten Zertifikates, von dem das zweite Zertifikat abgeleitet ist, eine sog. "Zertifikat-Prüfungsanfrage", an die das Zertifikat ausstellende Zertifizierungsstelle, wobei diese Anfrage zumindest einen empfangenen ersten öffentlichen Schlüssel beinhaltet. Mit dem dem ersten öffentlichen Schlüssel zugeordneten ersten privaten Schlüssel ist das abgeleitete zweite Zertifikat, welches der Nutzer gegenüber dem Dienst-Computersystem verwendet, signiert.

Entscheidend für die Sicherheit des erfindungsgemäßen Verfahrens ist es, dass ersten privaten Schlüssels, mit Hilfe dessen ohne Einschränkungen rechtsverbindliche Signaturen erzeugt werden können, stets sicher verwahrt wird. Insbesondere kommt er bei keiner Interaktion mit Dritten direkt zum Einsatz. Zum Signieren von Datensätze an Dritte wird allein der zweite private Schlüssel des abgeleiteten zweiten Zertifikats verwendet. Insbesondere sind erster und zweiter privater Schlüssel nicht nur logisch, sondern auch physisch voneinander getrennt bzw. werden spätestens direkt im Anschluss an die Erstellung des abgeleiteten Zertifikats voneinander getrennt.

Die "Zertifikat-Prüfungsanfrage" enthält den öffentlichen Schlüssel, der dem zu prüfenden Zertifikat zugeordnet ist. Die Zuordnung von öffentlichem Schlüssel zu einem Zertifikat bedeutet, dass der private Schlüssel, der zur Signierung der zu signierenden Daten verwendet wurde, und der öffentliche Schlüssel ein asymmetrisches kryptographisches Schlüsselpaar bilden, wobei das dem öffentlichen Schlüssel zugeordnete Zertifikat Eigenschaften des öffentlichen Schlüssels bestätigt. Der Empfang der Zertifikats-Prüfungsanfrage durch die Zertifizierungsstelle bewirkt beispielsweise, dass das die Zertifizierungsstelle prüft, ob ein dem öffentlichen Schlüssel, welcher in der Anfrage zur Überprüfung enthalten war, zugehöriges erstes Zertifikat existiert, verfügbar und/oder gültig ist. Falls ein solches erstes Zertifikat gefunden wird, wird dieses dem Dienst-Computersystem zur Verfügung gestellt. Da in diesem ersten Zertifikat Angaben zur Gültigkeit sowie zu Identifikatoren des zugeordneten Nutzers enthalten sind, kann das Dienst-Computersystem überprüfen, ob die vorliegende Signatur für das abgeleitete Zertifikat Gültigkeit besitzt, d.h. dass die in dem abgeleiteten Zertifikat getroffenen Zeitangaben und die genannten Identifikatoren weder der zeitlichen Gültigkeit noch den Identifikatoren des ersten Zertifikats wiedersprechen.

Alternativ können das erste Zertifikat von der Zertifizierungsstelle auch auf einer Datenbank bereitgestellt werden, auf welche das Dienst-Computersystem zur Überprüfung einer ihm vorliegenden Signatur zugreifen kann.

Nach einer weiteren Ausführungsform ist auch das erste Zertifikat zweckgebunden und weist limitierende Attribute auf. In diesem Fall wird zudem übergeprüft, dass die Attribute des zweiten Zertifikats den Attributen des ersten Zertifikats nicht widersprechen und dass insbesondere alle limitierenden Attribute des ersten Zertifikats auch als limitierende Attribute im abgeleiteten Zertifikat vorhanden sind. Dabei reicht es aus, wenn für jedes Attribut des ersten Zertifikats zumindest ein entsprechendes enger gefasstes Attribut im abgeleiteten Zertifikat enthalten ist.

Nach Ausführungsformen der Erfindung werden die Zeitangabe, ein den mindestens einen ausgewählten Identifikator angebendes Auswahlsignal und das mindestens eine limitierende Attribut von dem zweiten Gerät auf das erste Gerät übertragen und der Datensatz, welcher den erzeugten zweiten öffentlichen Schlüssel, die Zeitangabe, den mindestens einen Identifikator und das mindestens eine limitierende Attribut beinhaltet, wird auf dem ersten Gerät erzeugt.

Nach Ausführungsformen der Erfindung werden der mindestens eine ausgewählte Identifikator und der erzeugte zweite öffentliche Schlüssel von dem ersten Gerät auf das zweite Gerät übertragen und der Datensatz, welcher den erzeugten zweiten öffentlichen Schlüssel, die Zeitangabe, den mindestens einen Identifikator und das mindestens eine limitierende Attribut beinhaltet, wird auf dem zweiten Gerät erzeugt.

Nach Ausführungsformen der Erfindung werden der zweite öffentliche Schlüssel, die Zeitangabe, ein den mindestens einen ausgewählten Identifikator angebendes Auswahlsignal und das mindestens eine limitierende Attribut von dem zweiten Gerät auf das erste Gerät übertragen und der Datensatz, welcher den zweiten öffentlichen Schlüssel, die Zeitangabe, den mindestens einen Identifikator und das mindestens eine limitierende Attribut beinhaltet, wird auf dem ersten Gerät erzeugt.

Nach Ausführungsformen der Erfindung wird auf dem ersten Gerät ein Hash-Wert des erzeugten Datensatzes erzeugt und das Signieren des Datensatzes erfolgt durch Signieren des Hash-Wertes und Hinzufügen des signierten Hash-Werts als Signatur zum erzeugten Datensatz.

Das Erstellen von Hash-Werten zum Signieren des erstellten Datensatzes erweist sich insbesondere aufgrund der geringen Datenmenge als vorteilhaft, da sich diese leicht übertragen lassen und nur wenig Speicherplatz auf dem signierenden Gerät voraussetzen.

Nach Ausführungsformen der Erfindung wird der Datensatz nach dem Signieren von dem ersten Gerät auf das zweite Gerät übertragen.

Nach Ausführungsformen der Erfindung wird der mindestens eine ausgewählte Identifikator von dem ersten Gerät auf das zweite Gerät übertragen und der Datensatz, welcher den zweiten öffentlichen Schlüssel, die Zeitangabe, den mindestens einen Identifikator und das mindestens eine limitierende Attribut beinhaltet, wird auf dem zweiten Gerät erzeugt.

Nach Ausführungsformen der Erfindung wird der erzeugte Datensatz zum Signieren auf das erste Gerät übertragen und nach dem Signieren von dem ersten Gerät zurück auf das zweite Gerät übertragen.

Nach Ausführungsformen der Erfindung wird auf dem zweiten Gerät ein Hash-Wert des erzeugten Datensatzes erzeugt, der Hash-Wert auf das erste Gerät übertragen und das Signieren des Datensatzes erfolgt durch Signieren des Hash-Wertes, Zurückübertragen des signierten Hash-Werts von dem ersten Gerät auf das zweite Gerät und Hinzufügen des signierten Hash-Werts als Signatur zu dem Datensatz auf dem zweiten Gerät.

Nach Ausführungsformen der Erfindung wird eine Mehrzahl von limitierenden Attributen für das zweite Zertifikat festgelegt.

Nach Ausführungsformen der Erfindung ist zumindest eines der festgelegten limitierenden Attribute ein maximaler Geldbetrag, ein Dienstleister, eine Ware oder eine Dienstleistung.

Nach Ausführungsformen der Erfindung wird eine Mehrzahl von Identifikatoren aus dem geschützten Speicherbereich des ersten Geräts für das zweite Zertifikat ausgewählt.

Durch das Festlegen einer Mehrzahl von limitierenden Attributen kann der zulässige Verwendungszweck des abgeleiteten zweiten Zertifikats genau angegeben werden. Sollte beispielsweise ein Zertifikat zum Signieren einer Bestellung erstellt werden, so könnten die limitierenden Attribute den Anbieter umfassen, bei welchem Waren erworben werden sollen, ebenso wie die Warenart oder auch den genauen Artikel, der erworben werden soll, und einen maximalen Bestellwert. Zudem kann mittels der Zeitangabe der Gültigkeitszeitraum des Zertifikats eng gewählt werden, beispielsweise wenige Monate, wie etwa drei Monate, oder wenige Wochen bzw. Tage, wie etwa zwei Wochen oder drei Tage. Schließlich kann neben dem Namen des Inhabers des ersten Zertifikats als Besteller zusätzlich dessen Anschrift als Lieferadresse durch Wahl eines entsprechenden Identifikators angegeben werden.

Beispielsweise kann für das abgeleitete Zertifikat festgelegt werden, dass dieses einen Monat gültig ist und nur für Buchbestellungen bei einem bestimmten Buchhändler mit einem maximalen Bestellwert von 40 € verwendet werden kann, wobei die bestellten Bücher an die Anschrift des Inhabers des ursprünglichen Zertifikats zu senden sind. Somit könnte selbst im Falle eines Missbrauchs mit dem Zertifikat allenfalls eine ungewünschte Bücherlieferung im Wert von maximal 40 € an die Adresse des Zertifikatinhabers veranlasst werden. Zum einen stellt dies einen geringen Schaden dar, zum anderen kann der Nutzer die ungewünschten bestellten Waren im Allgemeinen ohne Weiteres an den Händler zurücksenden und erhält den Kaufpreis zurückerstattet.

Schließlich lässt sich ein entsprechendes Zertifikat bei Verlust leicht durch Ableiten eines neuen Zertifikats ersetzen.

Im oben beschriebenen Beispiel tendiert das Risiko für den Zertifikatsinhaber bei Missbrauch oder Verlust des Zertifikats somit nahezu gegen null. Dies unterscheidet sich deutlich von dem Verlust eines in seinen Verwendungsmöglichkeiten unbeschränkten Zertifikats, welches einer digitalen Blankounterschrift entspricht. In letzterem Fall ist das Schadensrisiko bei Missbrauch oder Verlust erheblich.

Dadurch, dass der Nutzer die abgeleiteten Zertifikate selbst erstellen kann, werden zudem Kosten für die Zertifikatserstellung eingespart, da diese nicht mehr von einem übergeordneten Anbieter eingekauft werden müssen. Dies ist insbesondere von Vorteil, wenn die einzelnen Zertifikate in ihrer Verwendungsmöglichkeit stark eingeschränkt sind, da dann in der Praxis eine große Anzahl von Zertifikaten für unterschiedliche Anwendungen notwendig ist.

Eine Zeitangabe kann beispielsweise durch ein passendes Setzen der "validity" bei Erzeugung eines abgeleiteten X.509-Zertifikats realisiert werden und die limitierenden Attribute können dadurch realisiert werden, dass die "user notice" mit entsprechenden Informationen über die Nutzungseinschränkungen versehen wird.

Nach Ausführungsformen der Erfindung sind die Kommunikationsschnittstellen des ersten und zweiten Geräts Kommunikationsschnittstellen in Form kontaktbehafteter oder kontaktloser Schnittstellen, insbesondere kontaktlose Schnittstellen nach einem RFID- und/oder NFC-Standard.

Nach Ausführungsformen der Erfindung weist das zweite Gerät eine Eingabevorrichtung und eine Anzeigevorrichtung zum Festlegen der Zeitangabe und des mindestens einen limitierenden Attributs sowie zur Auswahl des mindestens einen Identifikators auf.

Nach Ausführungsformen der Erfindung ist das erste Gerät ein integraler Bestandteil des zweiten Geräts, sodass das erste Gerät aus dem zweiten Gerät nicht zerstörungsfrei ausbaubar ist, und die Kommunikationsschnittstellen zur Kommunikation zwischen den beiden Geräten interne Busschnittstellen sind.

Nach Ausführungsformen der Erfindung weist das Verfahren folgende zusätzliche Schritte auf:
- Empfangen eines mit dem zweiten Zertifikat zu signierenden Datensatzes auf dem zweiten Gerät,
- Signieren des empfangenen Datensatzes mit dem zweiten privaten Schlüssel des zweiten Zertifikats,
- Ausgeben des signierten Datensatzes und des zweiten Zertifikat aus dem zweiten Gerät.

Nach Ausführungsformen der Erfindung wird das abgeleitete zweite Zertifikat von dem zweiten Gerät zusammen mit dem zweiten privaten Schlüssel des zweiten Zertifikats ausgegeben.

Nach Ausführungsformen der Erfindung empfängt das zweite Gerät vor dem Festlegen der limitierenden Attribute eine Attributspezifikation und das Festlegen der Attribute erfolgt durch Auswahl aus einer durch die Attributspezifikation vordefinierten Gruppe von Attributen.

Eine solche Attributspezifikation kann beispielsweise von einem Dienstleistungsanbieter bereitgestellt werden. Dieser kann dadurch die Anzahl möglicher limitierender Attribute und damit die Gestaltungsfreiheit von abgeleiteten Zertifikaten, die er für Bestellungen akzeptiert, einschränken. Dies hat den Vorteil, dass der Nutzer in Abhängigkeit von den vorgegebenen Auswahlmöglichkeiten der Attributspezifikation weiterhin eine nicht unerhebliche Wahlmöglichkeit für die Einschränkung der Verwendbarkeit seiner abgeleiteten Zertifikate besitzt und andererseits die Kombinationsmöglichkeiten von abgeleiteten Zertifikaten, welche in Bestellungen verwendet werden, auf eine von dem Anbieter vernünftige Weise handhabbare Anzahl reduziert wird. Dem Anbieter wird es somit ermöglicht, selbst bei einer großen Anzahl von Bestellungen den Arbeitsaufwand für die Überprüfung der verwendeten Zertifikate in einem vertretbaren Rahmen zu halten, während dem Benutzer nach wie vor weitgehende Beschränkungsmöglichkeiten zur Verfügung stehen.

Nach Ausführungsformen der Erfindung weist das zweite Gerät eine weitere Kommunikationsschnittstelle zur Kommunikation mit einem Dienst-Computersystem , die als kontaktbehafteten oder kontaktlosen Schnittstelle zum Empfang eines mit dem zweiten Zertifikat zu signierenden Datensatzes, zur Ausgabe des zweiten Zertifikats zusammen mit dem zweiten privaten Schlüssel und/oder zum Empfang einer Attributspezifikation konfiguriert ist, insbesondere eine kontaktbehaftete USB- oder Netzwerkschnittstelle oder eine kontaktlose Schnittstelle nach einem RFID- und/oder NFC-Standard oder WLAN-, Mobilfunk- oder Internet-Standard.

In einer solchen Ausführungsform ist das zweite Gerät zum Zugreifen auf ein Netzwerk konfiguriert, sodass es dem Nutzer ermöglicht wird das zweite Gerät für verschiedene Dienste, beispielsweise für eCommerce oder eGovernment-Anwendungen, zu verwenden.

Nach Ausführungsformen der Erfindung ist das erste Gerät ein Dokument, insbesondere ein Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder ein Firmenausweis, oder ein anderes ID-Dokument, eine Chipkarte, ein Zahlungsmittel, insbesondere Banknote, Bankkarte oder Kreditkarte, Frachtbrief oder ein sonstiger Berechtigungsnachweis. Insbesondere kann es sich bei dem ersten Gerät um ein Machine-Readable Travel Document, wie beispielsweise von der Internationalen Luftfahrtbehörde (ICAO) und/oder dem BSI standardisiert, handeln.

Nach Ausführungsformen der Erfindung ist das zweite Gerät ein Telekommunikationsgerät, insbesondere ein Smartphone.

Nach Ausführungsformen der Erfindung ist das zweite Gerät eine Chipkarte, ein Dokument, ein USB-Stick oder ein anderes Secure Element (SE), wie beispielsweise von Global Platform (www.globalplatform.org) spezifiziert, verstanden.

Für das vorliegende erfindungsgemäße Verfahren können insbesondere zwei Geräte mit unterschiedlichen Sicherheitsanforderungen gewählt werden. So ist für das erste Gerät, welches den privaten Schlüssel des nicht oder nur im geringem Umfang zweckgebundenen ersten Zertifikats aufweist, ein höheres Sicherheitsniveau haben, wie es beispielsweise durch den geschützten Speicherbereich realisiert wird, zu wählen. Demgegenüber kann für das zweite Gerät ein wesentlich niedrigerer Sicherheitsstandard gewählt werden. Beispielsweise empfiehlt es sich, dass die Eigenschaften des ersten Geräts vorzugsweise per Common Criteria Evaluierung bezüglich eines passenden Schutzprofils zertifiziert sind.

In einer Ausführungsform erfolgt die Erzeugung des zweiten Zertifikats in dem ersten Gerät, in welches eine vertrauenswürdige Zertifizierungsstelle das erste Zertifikat, zumindest aber den ersten privaten Schlüssel, eingebracht hat. Der Nutzer kann über eine Eingabevorrichtung, beispielsweise ein berührungsempfindliches Display, die Zeitangabe und die limitierenden Attribute festlegen sowie Identifikatoren wählen. Anschließend wird nun das abgeleitete zweite Zertifikat erzeugt und zusammen mit dem erzeugten zweiten privaten Schlüssel auf das zweite Gerät, beispielsweise einem USB-Stick, übertragen werden. Es steht nun dem Nutzer frei, das zweite Zertifikat und insbesondere den zweiten privaten Schlüssel in eine Umgebung seiner Wahl anzubringen. Um einen hohen Sicherheitsstandard für das erste Gerät zu gewährleisten, empfiehlt es sich, dass dieses nur über eine einzige Kommunikationsschnittstelle verfügt und insbesondere keinerlei weitere Software nach Auslieferung des Geräts auf dieses aufgebracht werden kann.

In einer Ausführungsform erfolgt die Erzeugung des zweiten Zertifikats auf dem zweiten Gerät, wobei der erste private Schlüssel von dem ersten Gerät beispielsweise in Form eines Personalausweises bereitgestellt wird. Eine Signatur für eine von dem zweiten Gerät erzeugten Datensatz kann in einfacher Form durch Erzeugen eines Hash-Werts für den Datensatz auf dem zweiten Gerät erstellt werden, indem der erstellte Hash-Wert von dem zweiten Gerät auf den Personalausweis übertragen und dort mit dem ersten privaten Schlüssel signiert wird. Hierbei kann es sich bei dem zweiten Gerät beispielsweise um ein speziell für das vorliegende erfindungsgemäße Verfahren konfiguriertes Mobilfunkgerät, etwa ein entsprechendes Smartphone, handeln. Das so erzeugte zweite Zertifikat kann beispielsweise auf dem zweiten Gerät belassen werden und dieses zum Signieren elektronischer Datensätze, wie etwa eine Bestellung, verwendet werden.

Hierzu wird der entsprechende Datensatz als Text über eine lokale Schnittstelle, beispielsweise NFC, Bluetooth oder WiFi, an das zweite Gerät übertragen, mittels des zweiten privaten Schlüssels und des abgeleiteten Zertifikats signiert und wieder zurück übertragen. Dies kann in der Praxis den Nachteil haben, dass unter Umständen nicht genau ersichtlich ist, was signiert wird. Bei einer ausreichenden Limitierung der möglichen Verwendungszwecke des zweiten Zertifikats, ist es jedoch nicht notwendig, genau zu sehen, was signiert wird. Wird etwas signiert, das gemäß Einschränkung des zweiten Zertifikats nicht lässig ist, so ist die resultierende Signatur für jeden Empfänger erkennbar ungültig. Sollte etwa ein Händler trotz ungültiger Signatur eine Lieferung vornehmen, so kann sich bei dieser nicht mehr erfolgreich auf die Beweislastumkehr berufen. Dem Händler wird es im Gegenteil nicht möglich sein das Vorliegen einer gültigen Signatur, die nie existiert hat, nachzuweisen.

Die Eingabevorrichtung kann beispielsweise eine Tastatur, ein berührungsempfindliches Display oder ein Spracheingabeinterface sein. Die Eingabevorrichtung kann insbesondere zur Eingabe einer PIN zur Authentifizierung des Nutzers ausgelegt sein. Zudem kann die Eingabevorrichtung zum Erfassen eines biometrischen Merkmals des Nutzers konfiguriert sein, wie etwa eines Fingerabdrucks, einer Handvenenstruktur oder einer Irisstruktur,

In einer weiteren Ausführungsform könnte das zweite Zertifikat beispielsweise für das Parken auf einem kostenpflichtigen Parkplatz genutzt werden, wobei durch eine mit dem zweiten privaten Schlüssel erzeugte Signatur ein Parkticket angefordert bzw. bezahlt wird. Hierzu kann der Gültigkeitszeitraum des Zertifikats auf beispielsweise ein oder zwei Jahre beschränkt werden und zugleich der entsprechende Parkplatz identifiziert und der maximal zulässige Betrag für Parkgebühren festgelegt werden. Zudem könnten zusätzlich das Nummernschild des Fahrzeugs, für welches die Parkgebühren entrichtet werden sollen, angegeben werden. Damit werden die Missbrauchsmöglichkeiten des abgeleiteten Zertifikats nahezu auf null reduziert.

In einer weiteren Ausführungsform könnte das zweite Zertifikat beispielsweise für einen Einkauf im Internet bei einem Dienst-Computersystem genutzt werden. Mittels einer weiteren Kommunikationsschnittstelle des zweiten Geräts kann über ein Netzwerk eine Verbindung mit dem Dienst-Computersystem hergestellt werden. Das abgeleitete zweite Zertifikat wird mit solchen Identifikatoren und Attributen versehen, dass nur ein Einkauf in einem klar definierten Rahmen möglich ist. So wird beispielsweise festgelegt, was, wo, zu welchem Preis und für wen mit dem Zertifikat bestellt werden kann. Vorteilhafter weise wird auch die Lieferadresse festgelegt.

Im Weiteren werden Ausführungsformen der Erfindung mit Bezug auf die Zeichnung näher erläutert. Es zeigen:
- Figur 1: ein Blockdiagramm eines Anwendungsfalls des erfindungsgemäßen Verfahrens,
- Figur 2: ein Blockdiagramm einer ersten Ausführungsform eines erfindungsgemäßen elektronischen Systems,
- Figur 3: ein Blockdiagramm einer zweiten Ausführungsform eines erfindungsgemäßen elektronischen Systems,
- Figur 4: ein Blockdiagramm einer dritten Ausführungsform eines erfindungsgemäßen Systems,
- Figur 5: ein UML-Diagramm einer ersten Ausführungsform eines erfindungsgemäßen Verfahrens für das System aus Figur 2,
- Figur 6: ein UML-Diagramm einer zweiten Ausführungsform eines erfindungsgemäßen Verfahrens für das System aus Figur 3,
- Figur 7: ein UML-Diagramm einer dritten Ausführungsform eines erfindungsgemäßen Verfahrens für das System aus Figur 4,
- Figur 8: ein Flussdiagramm der ersten Ausführungsform eines erfindungsgemäßen Verfahrens aus Figur 5,
- Figur 9: ein Flussdiagramm für die zweite Ausführungsform eines erfindungsgemäßen Verfahrens aus Figur 6,
- Figur 10: ein Flussdiagramm der dritten Ausführungsform eines erfindungsgemäßen Verfahrens aus Figur 7.

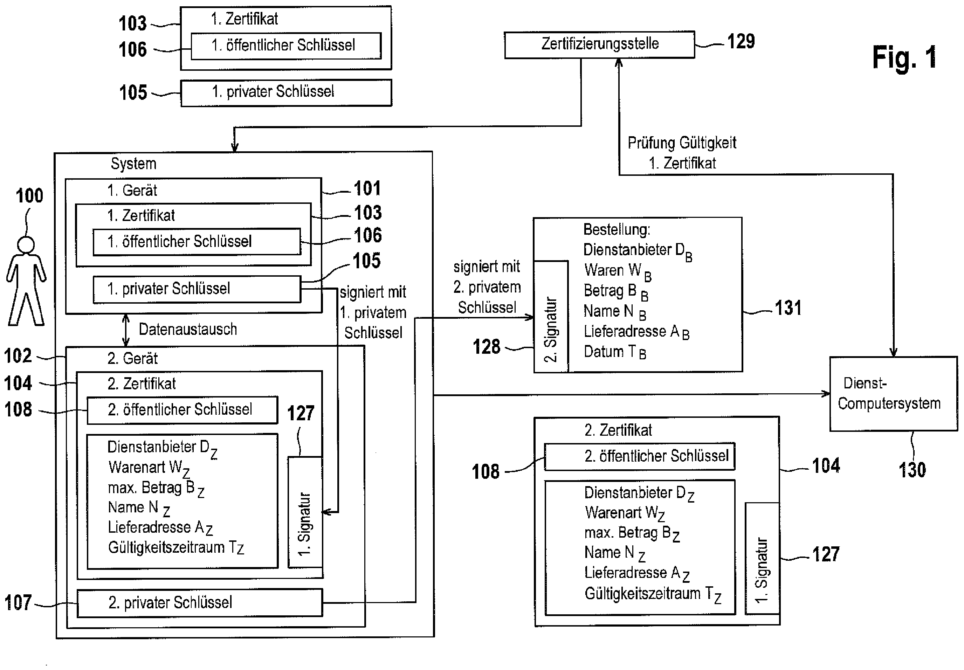

Figur 1 zeigt ein erfindungsgemäßes elektronisches System bestehend aus einem ersten und zweiten Gerät 101 und 102, die sich in der freien Verfügung eines Nutzers 100 befinden. Vorzugsweise handelt es sich sowohl bei dem ersten Gerät 101 als auch bei dem zweiten Gerät 102 um kleine handliche Geräte, beispielsweise von der Größe gängiger Smartphones. Beispielsweise kann es sich bei den beiden Geräten 101 und 102 auch um Geräte von der Größe typischer Wert- oder Sicherheitsdokumente, wie beispielsweise einen Personalausweis, handeln. Insbesondere bei dem ersten Gerät 101 kann es sich um ein Dokument, insbesondere ein Wert- oder Sicherheitsdokument, insbesondere ein hoheitliches Dokument, insbesondere ein papierbasiertes und/oder kunststoffbasiertes Dokument handeln. Dies hat den Vorteil, dass sich das erste Gerät 101 leicht an einem sicheren Ort, wie beispielsweise einem kompakten Tresor oder einem Schließfach, verwahren und vor einem Zugriff durch Dritte schützen lässt.

In einem geschützten Speicherbereich 111 eines elektronischen Speichers 109 des ersten Geräts 101 befindet sich ein erstes Zertifikat 103 mit einem ersten öffentlichen Schlüssel 106 sowie einem dem ersten öffentlichen Schlüssel 106 zugeordneten ersten privaten Schlüssel 105, sodass die beiden Schlüssel 106 und 105 miteinander ein kryptografisches Schlüsselpaar bilden. Das Zertifikat 103 mit den Schlüsseln 105 und 106 wurde von einer Zertifizierungsstelle 129 für den Nutzer 100 ausgestellt und vorzugsweise von der Zertifizierungsstelle 129 oder einer mit dieser verbundenen Instanz in das Gerät 101 eingebracht. Hierbei werden vorteilhafter Weise hohe Sicherheitsstandards eingehalten und die Eigenschaften des Geräts 101 sind vorzugsweise mittels Concrete Criteria Evaluierung bezüglich eines passenden Schutzprofiles zertifiziert.

Bei dem ersten Zertifikat 103 kann es sich in erfindungsgemäßen Ausführungsformen allerdings auch um ein abgeleitetes Dokument einer Dokumenten-PKI handeln. Voraussetzung ist lediglich, dass die Zertifizierungsstelle 129 und gegebenenfalls weitere Zertifizierungsstellen sichere Trust-Anker bilden, sodass eine sichere Signaturkette bis zu diesen Trust-Ankern zurückverfolgt werden kann.

Dabei kann auch das Zertifikat 103 bereits limitierende Attribute aufweisen, die dessen Anwendungsmöglichkeiten und damit seinen Gültigkeitsbereich begrenzen. In diesem Fall muss sich der mögliche Verwendungsbereich des abgeleiteten zweiten Zertifikats 104 und damit dessen Attribute 125 innerhalb des von dem Zertifikat 103 vorgegebenen zulässigen Bereichs bewegen, damit das abgeleitete Zertifikat 104 Gültigkeit besitzt. Mit anderen Worten müssen die Zweckbestimmungen des ersten Zertifikats 103 an das abgeleitete Zertifikat 102 vererbt werden.

Der Nutzer 100 erstellt für sich unter Rückgriff auf das mittels des ersten Geräts 101 bereitgestellten erste Zertifikat 103 bzw. des zugehörigen ersten privaten Schlüssel 105 ein abgeleitetes zweites Zertifikat 104 mit einem zweiten öffentlichen Schlüssel 108. Dieses abgeleitete Zertifikat wird mit dem ersten privaten Schlüssel 105 des ersten Zertifikats 103 signiert. Dabei wird beispielsweise ein Datensatz 126 bestehend aus mindestens einem Identifikator 124, einer Zeitangabe 123 und mindestens einem limitierenden Attribut 125 sowie des zweiten öffentlichen Schlüssels 108 erstellt, ein Hash-Wert dieses Datensatzes 126 gebildet, der Hash-Wert mit dem ersten privaten Schlüssel 105 signiert und diese Signatur 127 zu dem Datensatz 126 hinzugefügt, welcher somit das zweite Zertifikat 104 bildet. Von wesentlichem Vorteil ist es dabei, dass am Ende des erfindungsgemäßen Verfahrens zur Erzeugung eines abgeleiteten zweiten Zertifikats 104 der für die Erstellung von Signaturen 128 maßgebliche zweite private Schlüssel 107 auf einem anderen Gerät, d.h. dem zweiten Gerät 102, als der erste private Schlüssel 105 angeordnet ist. Hierdurch werden die beiden Schlüssel nicht nur logisch, sondern auch physisch voneinander getrennt. Da mit dem zweiten privaten Schlüssel 107 des abgeleiteten Zertifikats 104 nur Signaturen 128, d.h. elektronische Unterschriften, mit begrenzter Gültigkeit und eingeschränktem Verwendungsmöglichkeiten erstellt werden können, sind an diesen privaten Schlüssel 107 deutlich geringere Sicherheitsanforderungen zu stellen als an den ersten vorzugsweise unbegrenzt gültigen ersten privaten Schlüssel 105. So kann der zweite private Schlüssel 107 auf dem zweiten Gerät von dem Nutzer 100 im Alltag mitgeführt werden und/oder auf weitere elektronische Systeme übertragen werden.

Bei einer erfindungsgemäßen Zeitangabe123 kann es sich beispielsweise um ein Ausstellungsdatum der Signatur 127 des abgeleiteten Zertifikats 104 handeln. Eine Prüfinstanz, wie etwa ein Dienst-Computersystem 130, wird dadurch in die Lage versetzt zu prüfen, wie alt ein abgeleitetes Zertifikat 104 ist und aufgrund ihre eigenen Richtlinien entscheiden, ob sie der Signatur 127 vertraut oder diese beispielsweise aufgrund eines fortgeschrittenen Alters ablehnt.

Bei der Zeitangabe 123 im Sinne der vorliegenden Erfindung kann es sich auch um ein Enddatum eines Gültigkeitszeitraums für das abgeleitete Zertifikat 104 handeln, sodass nur eine innerhalb dieses Zeitraums mit dem abgeleiteten Zertifikat 104 erstellte Signatur 128 gültig ist. Wird eine entsprechende Signatur 128 später erstellt besitzt sie keine Gültigkeit. Eine erfindungsgemäße Zeitangabe 123 kann sich darüber hinaus auch auf einen zum Zeitpunkt der Erstellung des Zertifikats 104 in der Zukunft liegenden Gültigkeitszeitraum handeln. So kann der Nutzer beispielsweise ein Zertifikat 104 für einen bestimmten Anlass, wie etwa eine anstehende Geschäfts- oder Urlaubsreise, erstellen und als Gültigkeitszeitraum den Reisezeitraum angeben. Somit besitzen Signaturen 128, welche mit diesem Zertifikat 104 erstellt wurden, nur im Zeitfenster dieses Gültigkeitszeitraums Gültigkeit.

Der Nutzer 100 erstellt beispielsweise mit dem zweiten Gerät 102 oder einem weiteren elektronischen Gerät wie etwa einem Computer eines Nutzer-Computersystems mit Internetzugang eine Bestellung 131 und sendet diese an ein Dienst-Computersystem 130, welches beispielsweise einem eCommerce-Händler zugeordnet ist. Die Bestellung 131 umfasst beispielsweise Angaben zu dem Dienstanbieter D_{B}, den bestellten Waren W_{B}, dem Wert der bestellten Waren B_{B}, den Namen N_{B} des Bestellers, die Lieferadresse A_{B} und das Bestelldatum T_{B}. Diese Angaben signiert der Nutzer 100 mit seinem zweiten privaten Schlüssel 107, indem er eine entsprechende zweite Signatur 128 erstellt. Zudem stellt er dem Dienst-Computersystem 130 das zweite Zertifikat 104 zur Verfügung, beispielsweise indem er es an die Bestellung 131 mit anhängt. Das abgeleitete Zertifikat 104 wurde beispielsweise speziell für diese Bestellung erstellt und umfasst Angaben zu einem Dienstanbieter D_{Z}, einer Warenart W_{Z}, einem maximalen Bestellwert B_{Z}, einen Namen N_{Z} des Bestellers, eine Lieferadresse A_{Z} und einen Gültigkeitszeitraum T_{Z}.

Das Dienst-Computersystem 130, welches die entsprechende Bestellung 131 mit dem angehängten Zertifikat 104 erhält, prüft nun nach einem erfindungsgemäßen Verfahren zum Prüfen einer mit einem abgeleiteten Zertifikat 104 erstellten Signatur 128, ob die Signatur 128 in der Bestellung 131 Gültigkeit besitzt. Hierzu wird geprüft, ob die Bestellung 131 mit dem abgeleiteten zweiten Zertifikat 104, d.h. mit dem zugeordneten zweiten privaten Schlüssel 107 signiert wurde. Zudem wird geprüft, ob der Inhalt der Bestellung 131 innerhalb der von dem zweiten Zertifikat 104 vorgegebenen Grenzen liegt, d.h. ob die Angaben zu Dienstanbieter, Besteller und Lieferadresse identisch sind, ob die Bestellung innerhalb des Gültigkeitszeitraums T_{Z} des Zertifikats 104 erstellt wurde, ob es sich bei den bestellten Waren W_{B} um Waren der Warenart W_{Z} handelt und ob der Bestellwert B_{B} kleiner oder gleich dem maximal zulässigen Bestellwert B_{Z} gemäß dem zweiten Zertifikat 104 ist. Des Weiteren wird geprüft, ob das zweite Zertifikat 104 mit dem ersten Zertifikat 103, d.h. mit dessen ersten privaten Schlüssel 105 signiert wurde. Zur Überprüfung der Signaturen 127 und 128 werden die entsprechenden öffentlichen Schlüssel 106 und 108 verwendet. Der zweite öffentliche Schlüssel 108 wird dem Computersystem 130 beispielsweise zusammen mit der Bestellung 131 zur Verfügung gestellt, der erste öffentliche Schlüssel 106 wird dem Dienst-Computersystem 130 beispielsweise durch die Zertifizierungsstelle 129 zur Verfügung gestellt. Des Weiteren wird geprüft, ob das erste Zertifikat 103 ebenfalls limitierende Angaben umfasst und gegebenenfalls ob diese den Gültigkeitsbereich des zweiten Zertifikats 104 mit umfassen, d.h. ob das erste Zertifikat 103 die Berechtigung aufweist die Zeitangabe 123, die Identifikatoren 124 und die limitierenden Attribute 125 des zweiten Zertifikats 104 zu signieren. Schließlich wird die Gültigkeit des ersten Zertifikats anhand von dessen Dokumenten-PKI unter Rückgriff auf die Zertifizierungsstelle 129 geprüft. Fallen alle zuvor genannten Prüfungen positiv aus, so weiß das Dienst-Computersystem 130, das sich um eine vertrauenswürdige Bestellung handelt und wird diese ausführen.

In einer Ausführungsform macht das Dienst-Computersystem 130 Vorgaben, welche Eigenschaften das erste Zertifikat 103 sowie das abgeleitete zweite Zertifikat 104 erfüllen müssen, damit diese akzeptiert werden. So kann eine entsprechende Vorgabe beispielsweise umfassen, dass es sich bei dem ersten Zertifikat 103 um ein Zertifikat ohne limitierende Attribute handelt, das von einer bestimmten anerkannten Zertifizierungsstelle 129 ausgestellt wurde. Zudem oder auch alternativ können bestimmte Vorgaben für die Zeiteingabe 123, die Identifikatoren 124 und die limitierenden Attribute 125 des zweiten Zertifikats 104 gemacht werden. Dies hat für das Dienst-Computersystem 130 insbesondere den Vorteil, dass der Prüfaufwand reduziert wird, was gerade im Falle einer großen Anzahl von Bestellungen 131 zu einer schneller Bearbeitung sowie Kosteneinsparungen führt. So kann etwa vorgegeben werden, dass der Gültigkeitszeitraum T_{Z} nicht nur wenige Tage, sondern mindestens noch einen Monat betragen soll, der maximale Bestellwert bei mindestens 100 € liegen soll und nur bestimmte Angaben bzw. Einschränkungen zur Warenart W_{Z} getroffen werden dürfen. In diesem Fall erstellt das Dienst-Computersystem 130 beispielsweise eine entsprechende Attributspezifikation und sendet diese dem Nutzer 100 zu, der beim Erstellen des zweiten Zertifikats 104 aus den Vorgaben der Attributspezifikation die von ihm gewünschten Parameter auswählt.

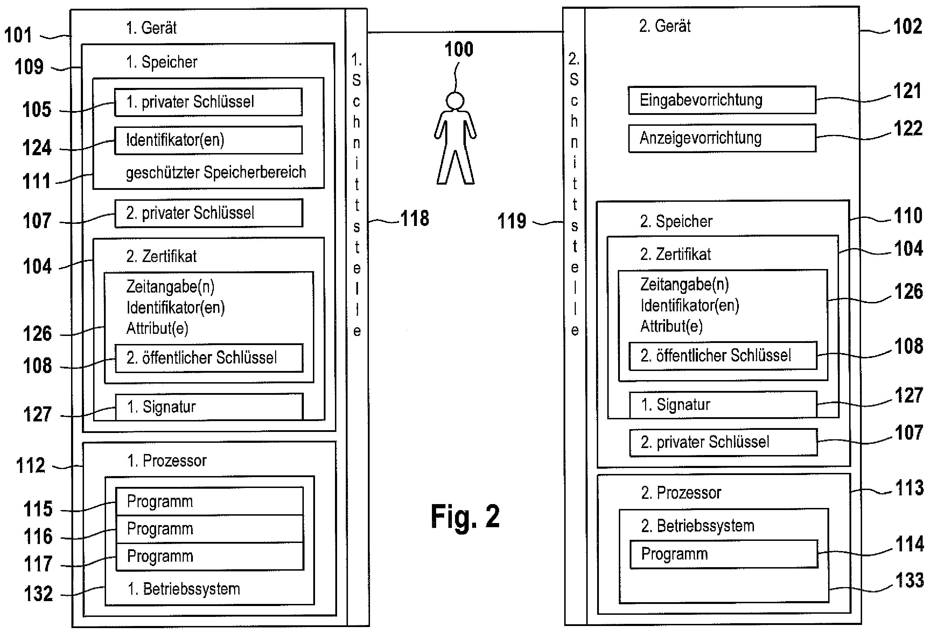

Figur 2 zeigt eine erste Ausführungsform eines erfindungsgemäßen elektronischen Systems, welches ein erstes Gerät 101 und ein zweites Gerät 102 umfasst. Diese beiden Geräte 101 und 102 befinden sich im Einflussbereich des Nutzers 100. Dieser bringt die beiden Geräte 101 und 102 derart physisch zusammen, dass diese über die erste Kommunikationsschnittstelle 118 und die zweite Kommunikationsschnittstelle 119 miteinander kommunizieren und Daten austauschen können. Bei diesen Kommunikationsschnittstellen 118 und 119 handelt es sich beispielsweise um kontaktbehaftete Schnittstellen, sodass die beiden Schnittstellen 118 und 119 zum Herstellen einer Verbindung miteinander in Kontakt gebracht werden müssen. Dies hat den Vorteil, dass der Datenaustausch zwischen dem ersten und zweiten Gerät 101 und 102 nur schwer ausgespäht und/oder manipuliert werden kann. Da für das abgeleitete zweite Zertifikat 104 in Abhängigkeit von den gewählten limitierten Attributen 125 deutlich geringere Sicherheitsanforderungen bestehen, bietet sich insbesondere eine kontaktlose Ausführung der Kommunikationsschnittstellen 118 und 119 an, beispielsweise nach einem RFID- und/oder NFC-Standard. Die hergestellte Verbindung kann in Form einer kryptografisch gesicherten End-zu-EndVerbindung ausgestaltet sein, dies ist im Falle der vorliegenden Erfindung jedoch nicht unbedingt notwendig.

In der gezeigten Ausführungsform weist das zweite Gerät 102 eine Eingabevorrichtung 121 zur Eingabe und Auswahl von Datenwerten auf sowie eine Anzeigevorrichtung 122, über welche dem Nutzer 100 seine Eingaben, seine Auswahlmöglichkeiten und die getroffene Auswahl angezeigt werden. Zum Betrieb des zweiten Geräts 102 weist dieses einen zweiten Prozessor 113 mit einem entsprechenden zweiten Betriebssystem 133 auf. Der Nutzer 100 legt mittels der Eingabevorrichtung 121 und der Anzeigevorrichtung 122 die von ihm gewünschte Zeitangabe 123 und mindestens ein limitierendes Attribut 125 fest. Zudem wählt er mindestens einen Identifikator 124 aus.

Die Auswahl eines Identifikators 124 kann grundsätzlich blind erfolgen, d.h. der Nutzer 100 weiß, welche Identifikatoren 124 auf dem ersten Gerät 101 gespeichert sind, und trifft seine Auswahl ohne Anzeige entsprechender Auswahloptionen, indem er beispielsweise festlegt, dass der als Identifikator auf dem ersten Gerät gespeicherte Name in das zu erstellende Zertifikat 104 übernommen werden soll. Ebenso ist es denkbar, dass das zweite Gerät 102, unabhängig vom ersten Gerät 101, über eine vorprogrammierte Auswahlliste mit möglichen Identifikatorenkategorien verfügt und der Nutzer die von ihm gewünschten Identifikatoren 124 nach Kategorie auswählen kann. Wählt er eine Kategorie, für die kein Identifikator 124 auf dem ersten Gerät 101 hinterlegt ist, so erhält er im Zuge der Erstellung des Zertifikats 104 eine Fehlermeldung. In einer weiteren Ausführungsform wird dem zweiten Gerät 102 von dem ersten Gerät 101 eine Auswahlliste gültiger Identifikatoren 124 nach Kategorien vorgegeben, d.h. an dieses übermittelt. Nach einer Ausführungsform wird dem zweiten Gerät 102 eine detaillierte Liste der auf dem ersten Gerät 101 gespeicherten Identifikatoren 124 übermittelt. In letzterem Fall ist es von Vorteil, wenn die Übertragung zwischen dem ersten Gerät 101 und dem zweiten Gerät 102 mit kryptografischen Verfahren gesichert wird.

Die von dem Nutzer 100 festgelegte Zeiteingabe 123 sowie das mindestens eine Attribut 125 werden zusammen mit dem Auswahlsignal für den ausgewählten Identifikator 124 über die beiden Kommunikationsschnittstellen 119 und 118 an das erste Gerät 101 übertragen. Die entsprechenden Eingaben werden vorzugsweise auf dem zweiten Gerät 102 zwischengespeichert, insbesondere in einem flüchtigen Speicher. Auf dem ersten Gerät 101 ist in einem geschützten Speicherbereich 111 eines nichtflüchtigen Speichers 109 ein erster privater Schlüssel 105 eines ersten Zertifikats 103 hinterlegt. Zudem befindet sich in dem geschützten Speicherbereich zumindest ein Identifikator 124. Das erste Gerät 101 weist darüber hinaus einen ersten Prozessor 112 mit einem ersten Betriebssystem 132 zum Betrieb des Geräts 101 auf. Ein Zugriff auf den geschützten Speicherbereich 111 ist dabei nur über den Prozessor 112 möglich. Der Prozessor 112, genauer gesagt das Betriebssystem 132, umfasst zudem Programminstruktionen 115 bis 117 zur Ausführung der für die Erstellung eines abgeleiteten Zertifikats notwendigen Schritte. So umfasst es Programminstruktionen 115 zur Erstellung eines kryptografischen Schlüsselpaars, bestehend aus einem zweiten privaten Schlüssel 107 und einem zweiten öffentlichen Schlüssel 108. Des Weiteren umfasst es Programminstruktionen 116 zur Erstellung eines Datensatzes 126 bestehend aus dem ausgewählten mindestens einen Identifikator 124 sowie der festgelegten Zeiteingabe 123 und dem mindestens einen limitierenden Attribut 125. Mithilfe von Programminstruktionen 117 zur Erstellung einer elektronischen Signatur 127 wird für den Datensatz 126 eine erste Signatur 127 erstellt und mit dem Datensatz 126 zu einem abgeleiteten zweiten Zertifikat 104 zusammengefügt. Dieses zweite Zertifikat 104 wird zusammen mit dem zweiten privaten Schlüssel 107 über die beiden Kommunikationsschnittstellen 118 und 119 zur weiteren Nutzung an das zweite Gerät übertragen.

Das erste Gerät 101 bildet somit eine Art Blackbox, auf die nur über die erste Kommunikationsschnittstelle 118 zugegriffen werden kann. Dies erschwert Manipulationen des ersten Geräts 101, welches damit sehr sicher ausgestaltet ist und insbesondere ein hohes Maß an Sicherheit für den besonders sicherheitssensiblen ersten privaten Schlüssels 105 gewährleistet. Das Gerät 101 kann zudem in einem heimischen Safe oder auf einer Bank verwahrt werden, wobei auf das erste Gerät 101 nur im Bedarfsfall zur Erstellung abgeleiteter Zertifikate 104 zugegriffen wird.

Das zweite Gerät 102 kann demgegenüber von dem Nutzer 100 frei im Alltag mitgeführt werden und zum Transport des abgeleiteten Zertifikats 104 und/oder zur Signatur 128 von Dokumenten für Alltagsgeschäfte verwendet werden. Hierfür kann das zweite Gerät 102 auch als Signaturerstellungseinheit ausgebildet und passend zugelassen sein, sodass es neben den Programminstruktionen 114 zum Betrieb der Eingabe- und Anzeigevorrichtung 121 und 122 auch zum Erstellen von Signaturen 128 mit dem zweiten privaten Schlüssel 107 konfiguriert ist. In diesem Fall weist es vorteilhafterweise noch eine weitere (nicht gezeigte) Schnittstelle auf. Ebenso kann das zweite Gerät 102 auch nur zur Erstellung und Verwahrung abgeleiteter zweiter Zertifikate 104 vorgesehen sein. Im Bedarfsfall werden die abgeleiteten Zertifikate 104 über die Kommunikationsschnittstelle 119 oder eine weitere (nicht gezeigte) Kommunikationsschnittstelle an weitere Systeme oder Vorrichtungen übergeben, welche zur Erstellung von Signaturen 128 mit dem zweiten privaten Schlüssel 107 konfiguriert sind.

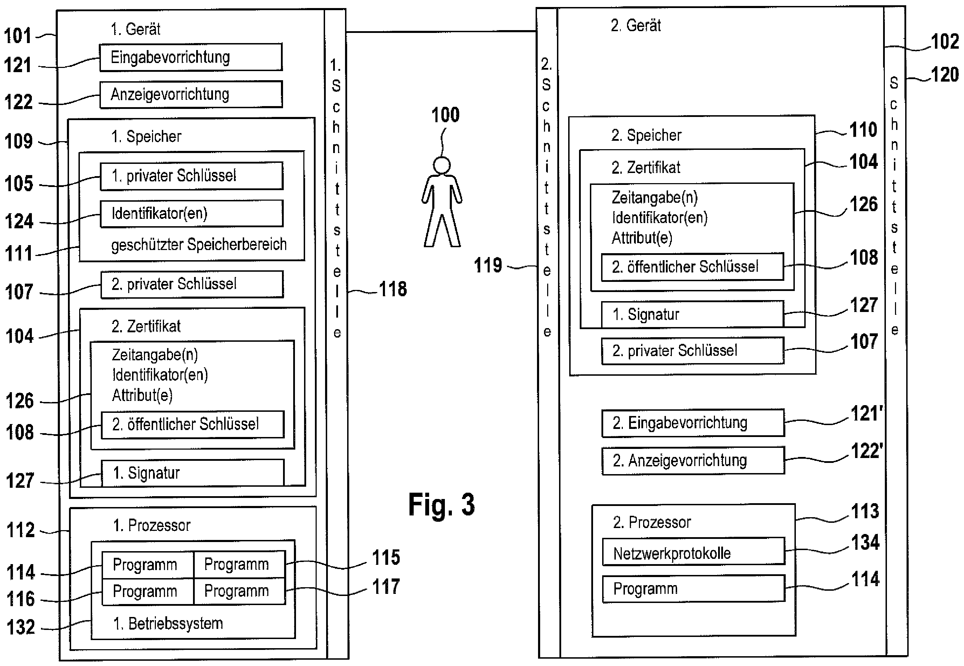

In Figur 3 ist eine zweite Ausführungsform eines erfindungsgemäßen elektronischen Systems gezeigt. In dieser zweiten Ausführungsform weist das erste Gerät 101, auf welchem der sicherheitssensible erste private Schlüssel 105 gespeichert ist, Eingabe- und Anzeigevorrichtungen 121 und 122 auf. Der erste Prozessor 112 verfügt über entsprechende Programminstruktionen 115 bis 117, die nicht nur die Erstellung eines kryptografischen Schlüsselpaars, bestehend aus einem zweiten privaten Schlüssel 107 und einem zweiten öffentlichen Schlüssel 108, sowie die Erstellung eines Datensatzes 126 und einer ersten Signatur 127 für das abgeleitete zweite Zertifikat 104 ermöglichen, sondern darüber hinaus auch über Programminstruktionen 114 zur Steuerung der Eingabe- und Anzeigevorrichtung 121 und 122.

In dieser Ausführungsform erfolgt die unmittelbar Erstellung des abgeleiteten zweiten Zertifikats 104 ausschließlich mit dem ersten Gerät 101. Auch in dieser Ausführungsform ist der erzeugte zweite private Schlüssel 107 von dem ersten privaten Schlüssel 105 getrennt. Zudem befindet sich der erste private Schlüssel 105 in einem geschützten Speicherbereich 111 des Speichers 109, während dies für den zweiten privaten Schlüssel 107 nicht der Fall ist. Um die beiden Schlüssel physisch weiter voneinander zu trennen, werden das erzeugte zweite Zertifikat 104 und der zugehörige zweite private Schlüssel 107 über Kommunikationsschnittstellen 118 und 119 von dem ersten Gerät 101 auf ein zweites Gerät 102 übertragen, wo das Zertifikat 104 und der zweite private Schlüssel 107 in einem zweiten Speicher 110 abgespeichert werden. Durch diese Übertragung werden die Schlüssel 105 und 107 auch physisch voneinander getrennt.

Dies erlaubt es wiederum, den ersten privaten Schlüssel 105 mit dem ersten Gerät 101 sicher zu verwahren, während der zweite private Schlüssel 107 mit dem abgeleiteten zweiten Zertifikat 104 auf dem zweiten Gerät 102 zur freien Verfügung im Alltag mitgeführt werden kann. Das zweite Gerät 102 ist dabei als ein Datenspeicher, aber auch als eine eigenständige Signaturerstellungseinheit ausgestaltet. Zusätzlich weist das zweite Gerät 102 in der dargestellten Ausführungsform eine weitere Schnittstelle 120 zur Kommunikation mit einem Dienst-Computersystem 130 auf. Diese kann in Form einer kontaktbehafteten oder kontaktlosen Schnittstelle zum Empfang eines mit dem zweiten Zertifikat 104 zu signierenden Datensatzes 126, zur Ausgabe des zweiten Zertifikats 104 zusammen mit dem zweiten privaten Schlüssel 107 und/oder zum Empfang von Attributspezifikationen ausgebildet sein. Insbesondere kann es sich um eine kontaktbehaftete USB- oder Netzwerkschnittstelle oder eine kontaktlose Schnittstelle nach einem RFID- und/oder NFC-Standard oder WLAN-, Mobilfunk- oder Internetstandard handeln. Bei dem zweiten Gerät 102 kann es sich zudem um ein für das vorliegenende Verfahren konfiguriertes Telekommunikationsgerät, insbesondere ein entsprechendes Smartphone, handeln.

Mittels der weiteren Kommunikationsschnittstelle 120 mit einem Dienst-Computersystem 130 in Kontakt treten und, indem der zweite Prozessor 113 des zweiten Geräts 102 über entsprechende Programminstruktionen verfügt, kann dieses Gerät als Signaturerstellungseinheit zum Signieren weiterer Datensätze, wie beispielsweise einer Bestellung in dem in Figur 1 dargestellten Bestellverfahren, dienen, Insbesondere verfügt das zweite Gerät 102 in der dargestellten Ausführungsform über Netzwerkprotokolle 134 in einem zweiten Prozessor 113, insbesondere TCP/IP-Protokolle (Transmission Control Protocol/Internet Protocol), mittels derer über die weitere Kommunikationsschnittstelle 120 eine Netzwerkverbindung zu einem Dienst-Computersystem 130 hergestellt werden kann. Hierzu weist das zweite Geräte 102 zusätzlich eine zweite Eingabe- und zweite Anzeigevorrichtung 121' und 122' auf, deren Betrieb mittels entsprechender Programminstruktionen 114 des zweiten Prozessors 113 gesteuert wird.

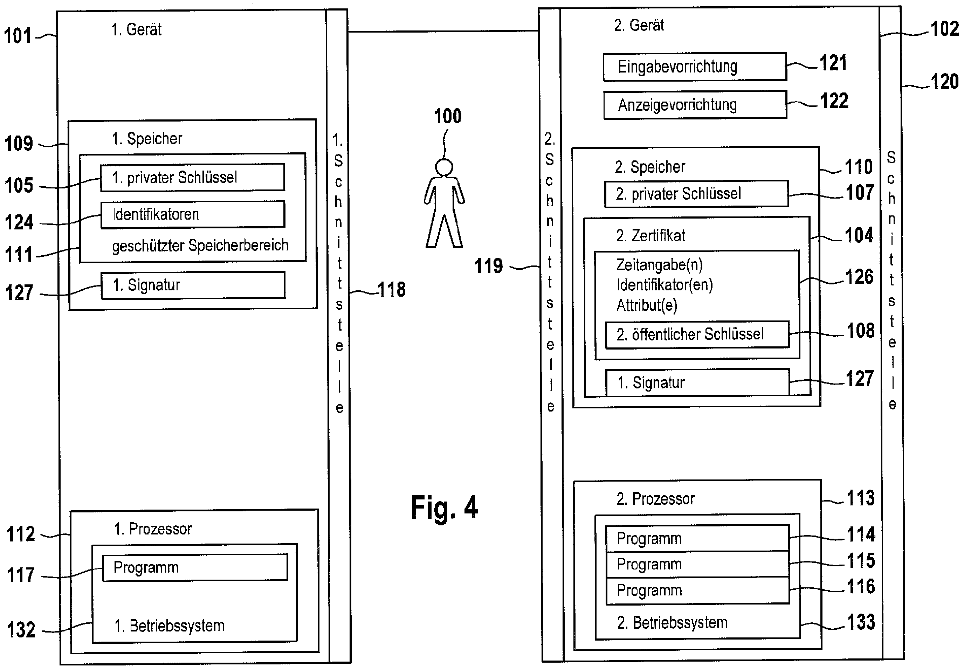

In Figur 4 ist schließlich eine dritte Ausführungsform eines erfindungsgemäßen elektronischen Systems dargestellt. Bei dieser dritten Ausführungsform umfasst das zweite Gerät 102 neben einer Eingabevorrichtung 121 und einer Anzeigevorrichtung 122 auch Programminstruktionen 114 bis 116 in einem zweiten Prozessor 113, welche es dem zweiten Gerät 102 erlauben, nicht nur als erweiterte Eingabe- und Anzeigeeinheiten, wie dies bei der ersten Ausführungsform der Fall ist, zu dienen.

Vielmehr werden auf dem zweiten Gerät 102 auf Basis der Programminstruktionen 115 ein zweiter privater Schlüssel 107 und ein zweiter öffentlicher Schlüssel 108 erstellt. Des Weiteren wird mittels Programminstruktionen 116 ein Datensatz 126 erzeugt, welcher den zweiten öffentlichen Schlüssel 108, die eine Zeitangabe 123 und mindestens ein limitierendes Attribut 125 umfasst. Zudem umfasst der Datensatz 126 mindestens einen auf Basis eines entsprechenden Auswahlsignals aus dem ersten Gerät 101 über die Kommunikationsschnittstellen 118 und 119 ausgelesenen Identifikator 124. Von diesem Datensatz wird durch das Gerät 102 beispielsweise ein Hash-Wert erstellt und dieser über die Kommunikationsschnittstellen 118 und 119 auf das erste Gerät 101 übertragen, wo er mit dem in einem geschützten Speicherbereich 111 verwahrten ersten privaten Schlüssel 115 signiert und anschließend auf das zweite Gerät 102 zurückübertragen wird. Auf dem zweiten Gerät 102 werden der Datensatz 126 und die erste Signatur 127 des Hash-Werts zu einem abgeleiteten Zertifikat 104 zusammengefügt. Hierzu verfügt das erste Gerät 101 über einen ersten Prozessor 112, welcher Programminstruktionen 117 zur Erstellung einer Signatur 127 umfasst.

Auch in dieser Ausführungsform weist das zweite Gerät 102 eine weitere Schnittstelle 120 zur Kommunikation mit einem Dienst-Computersystem 130 auf. Diese kann wiederum in Form einer kontaktbehafteten oder kontaktlosen Schnittstelle zum Empfang eines mit dem zweiten Zertifikat 104 zu signierenden Datensatzes 126, zur Ausgabe des zweiten Zertifikats 104 zusammen mit dem zweiten privaten Schlüssel 107 und/oder zum Empfang von Attributspezifikationen ausgebildet sein. Insbesondere kann es sich um eine kontaktbehaftete USB- oder Netzwerkschnittstelle oder eine kontaktlose Schnittstelle nach einem RFID- und/oder NFC-Standard oder WLAN-, Mobilfunk- oder Internetstandard handeln. Bei dem zweiten Gerät 102 kann es sich zudem um ein für das vorliegenende Verfahren konfiguriertes Telekommunikationsgerät, insbesondere ein entsprechendes Smartphone, handeln.

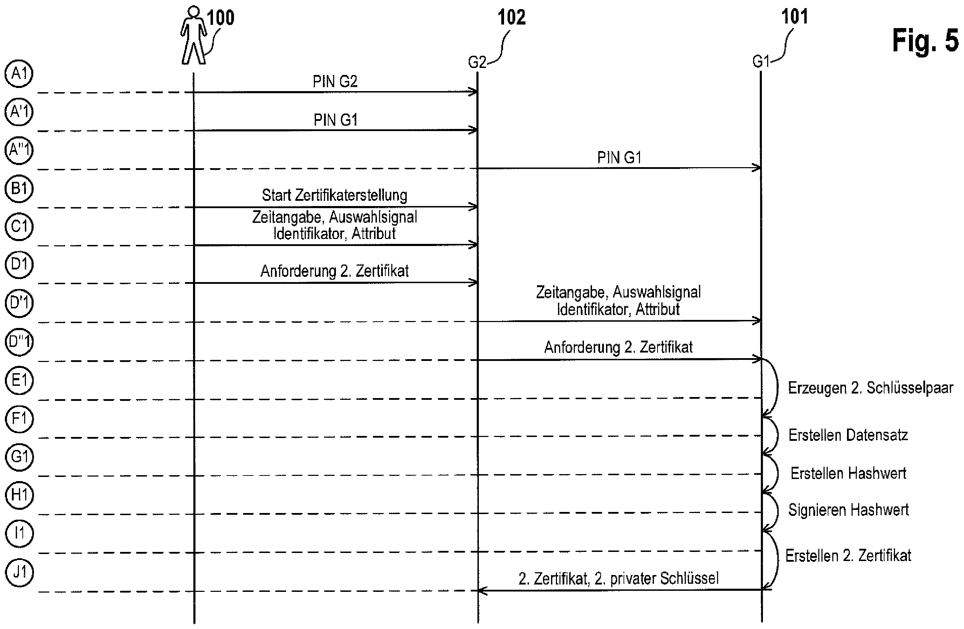

Figur 5 zeigt ein UML-Diagramm einer ersten Ausführungsform eines erfindungsgemäßen Verfahrens, wie es durch das elektronische System gemäß Figur 2 ausgeführt wird. Der Nutzer 100 gibt zunächst im Schritt A1 eine PIN zur Authentifizierung gegenüber dem zweiten Gerät 102 mittels der Eingabevorrichtung 121 ein. Zudem gibt er in Schritt A'1 eine zweite PIN für das erste Gerät 101 ein, wobei die Eingabe ebenfalls über die Eingabevorrichtung 121 des zweiten Geräts 102 erfolgt. Die eingegebene PIN wird beispielsweise von dem zweite Gerät 102 an das erste Gerät 101 übermittelt und dadurch mittels der Kommunikationsschnittstellen 118 und 119 eine Verbindung zwischen den beiden Geräten 101 und 102 hergestellt. In Schritt B1 gibt der Nutzer 101 ein Startsignal zum Starten eines Programmablaufs zur Erstellung eines abgeleiteten zweiten Zertifikats 104 in das zweite Gerät 102 ein. In Schritt C1 legt der Nutzer 100 die Zeiteingabe 123 und das mindestens eine limitierende Attribut 125 fest. Zudem trifft er eine Auswahl mindestens eines Identifikators 124. Sind diese Eingaben abgeschlossen, fordert der Nutzer 100 in Schritt D1 ein entsprechendes abgeleitetes Zertifikat 104 auf Basis der von ihm festgelegten Parameter an. In Schritt D'1 werden die Zeitangabe 123, das Auswahlsignal für mindestens einen Identifikator 124 und das mindestens eine limitierende Attribut 125 von dem zweiten Gerät 102 auf das erste Gerät 101 übertragen. Zudem wird in Schritt D"1 eine Aufforderung zur Erstellung eines zweiten Zertifikats 104 übertragen. In Antwort auf den Empfang dieser Aufforderung erzeugt das erste Gerät 101 in Schritt E1 ein kryptografisches Schlüsselpaar bestehend aus einem zweiten privaten Schlüssel 107 und einem zweiten öffentlichen Schlüssel 108. In Schritt F1 wird auf Basis der in Schritt D'1 übertragenen Informationen ein Datensatz 126 erzeugt, von diesem in Schritt G1 ein Hash-Wert gebildet, der Hash-Wert in Schritt H1 mit dem hinterlegten ersten privaten Schlüssel 105 signiert und die so erstellte Signatur 127 in Schritt I1 an den Datensatz 126 angehängt, wodurch das zweite Zertifikat 104 gebildet wird. In Schritt J1 werden das erzeugte zweite Zertifikat 104 und der zweite private Schlüssel 107 von dem ersten Gerät 101 über die beiden Kommunikationsschnittstellen 118 und 119 an das zweite Gerät 102 übertragen.

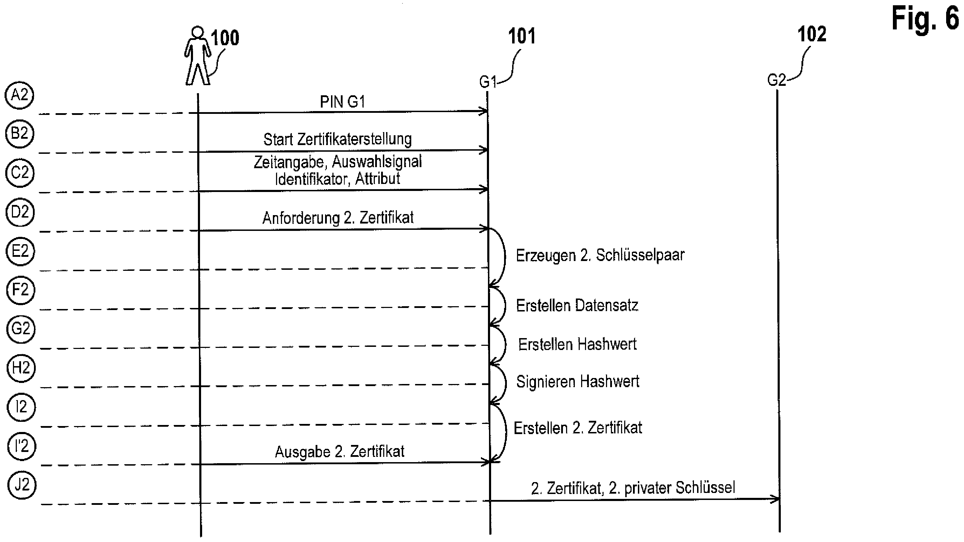

Das in Figur 6 gezeigte UML-Diagramm der zweiten Ausführungsform eines erfindungsgemäßen Verfahrens zeigt den Verfahrensablauf, wie er von dem elektronischen System gemäß Figur 3 umgesetzt wird. Die Erstellung des abgeleiteten zweiten Zertifikats 104 erfolgt in diesem Fall vollständig auf dem ersten Gerät 101. Mithin ist eine Authentisierung des Nutzers 101 gegenüber dem zweiten Gerät 102 nicht zwingend notwendig, da an das zweite Gerät 102 lediglich das erstellte zweite Zertifikat 104 und der zweite private Schlüssel 107 übertragen werden, welche geringeren Sicherheitsanforderungen unterliegen als der ersten privaten Schlüssel 105 für die Ausstellung des zweiten Zertifikats 104.

In Schritt A2 gibt der Nutzer 100 zur Authentisierung gegenüber dem ersten Gerät eine PIN in dieses Gerät ein. In Schritt B2 gibt der Nutzer 100 ein Startsignal zum Starten des Programmablaufs zur Erstellung des zweiten Zertifikats 104 ein, sowie in Schritt D2 die von ihm festgelegten bzw. ausgewählten Parameter 123 bis 125. In Schritt C2 fordert er das abgeleitete Zertifikat 104 an, woraufhin das erste Gerät 101 in Schritt E2 ein kryptografisches Schlüsselpaar erzeugt, welches einen zweiten privaten Schlüssel 107 und einen zweiten öffentlichen Schlüssel 108 umfasst. In Schritt F2 erstellt das erste Gerät 101 einen Datensatz, welcher die Parameterwahl 123 bis 125 umfasst sowie den zweiten öffentlichen Schlüssel 108. In Schritt G2 wird ein Hash-Wert des Datensatzes 126 erzeugt, der in Schritt H2 mit dem ersten privaten Schlüssel 105 signiert wird. In Schritt 12 wird die so erzeugte erste Signatur 127 zu dem Datensatz 126 hinzugefügt, wodurch das zweite Zertifikat 102 gebildet wird. In Schritt I'2 gibt der Nutzer 100 eine Ausgabeanforderung für das zweite Zertifikat 104 in das erste Gerät 101 ein, welches daraufhin das abgeleitete zweite Zertifikat 104 zusammen mit dem zweiten privaten Schlüssel 107 im Schritt J2 über die Kommunikationsschnittstellen 118 und 119 an das zweite Gerät 102 überträgt.

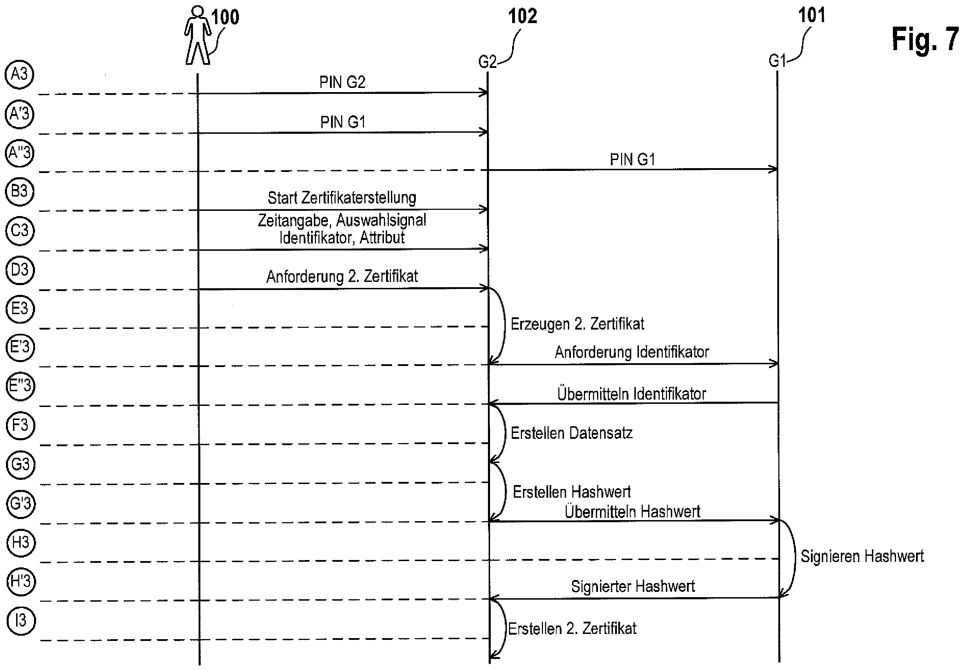

In Figur 7 ist schließlich ein UML-Diagramm einer dritten Ausführungsform eines erfindungsgemäßen Verfahrens gezeigt, wie es durch ein elektronisches System gemäß Figur 4 umgesetzt wird. Der Nutzer 100 authentisiert sich zunächst in Schritt A3 durch Eingabe eines entsprechenden PINs gegenüber dem Gerät 102. In Schritt A'3 gibt der Nutzer 100 einen weiteren PIN ein, welcher von dem Gerät 102 über die Kommunikationsschnittstellen 118 und 119 an das erste Gerät 101 weitergeleitet. So authentisiert sich der Nutzer auch gegenüber dem ersten Gerät 101 und eine Datenverbindung zur Erstellung eines abgeleiteten Zertifikats 104 wird zwischen den beiden Geräten 102 und 101 hergestellt. In Schritt B3 wird ein Startsignal in das Gerät 102 eingegeben, in Schritt C3 die Parameterauswahl 123 bis 125. In Schritt D3 fordert der Nutzer 100 ein abgeleitetes Zertifikat 104 an, woraufhin in Schritt E3 ein zweites Schlüsselpaar bestehend aus einem zweiten privaten Schlüssel 107 und einem zweiten öffentlichen Schlüssel 108 erstellt wird. Zudem wird in Schritt E'3 das in Schritt C3 eingegebene Auswahlsignal für zumindest einen Identifikator 124 von dem zweiten Gerät 102 an das erste Gerät 101 übermittelt, welches in Antwort darauf in Schritt E"3 den ausgewählten Identifikator 124 über die Kommunikationsschnittstellen 118 und 119 an das erste Gerät 102 überträgt. In Schritt F3 wird auf Basis der Parameter 123 bis 125 zusammen mit dem zweiten öffentlichen Schlüssel 108 ein Datensatz 126 erstellt, von welchem in Schritt G3 ein Hash-Wert gebildet wird. Dieser Hash-Wert wird in Schritt G'3 von dem zweiten Gerät 102 über die beiden Kommunikationsschnittstellen 118 und 119 an das erste Gerät 101 übertragen, wo in Schritt H3 mit dem ersten privaten Schlüssel 105 eine erste Signatur 127 für den Hash-Wert erstellt wird und der so signierte Hash-Wert in Schritt H'3 an das zweite Gerät 102 zurückübertragen wird. In Schritt I3 wird schließlich durch Hinzufügung des signierten Hash-Werts zu dem in Schritt F3 erstellten Datensatzes 126 das abgeleitete Zertifikat 104 erzeugt.

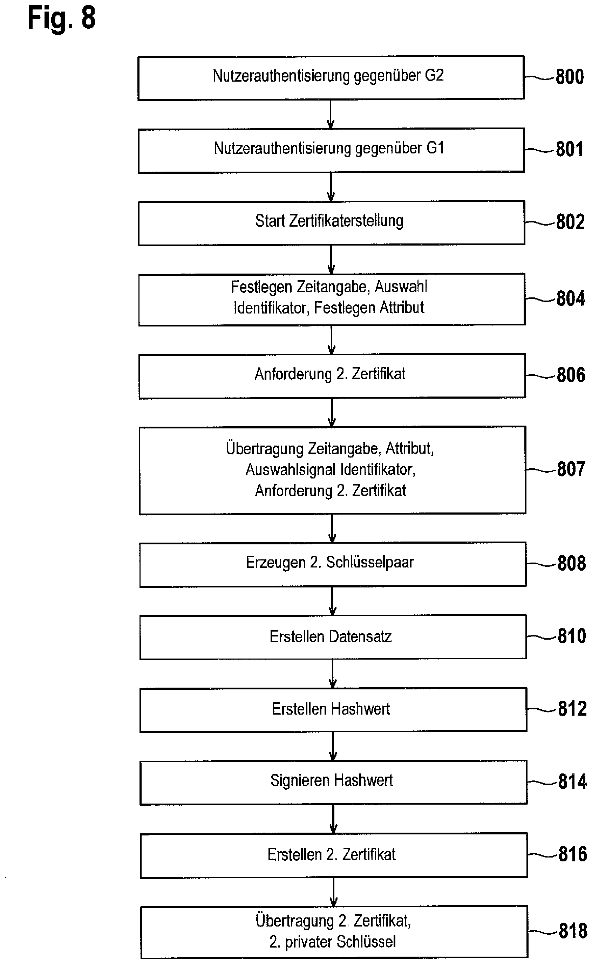

In Figur 8 ist ein Flussdiagramm der einzelnen Verfahrensschritte gemäß der ersten in Figur 5 gezeigten Ausführungsform dargestellt. In Schritt 800 erfolgt die Nutzerauthentisierung des Nutzers 100 gegenüber dem zweiten Gerät 102, in Schritt 801 die Nutzerauthentisierung gegenüber dem ersten Gerät 101. In Schritt 802 werden die Programmabläufe zur Erstellung eines abgeleiteten Zertifikats 104 gestartet. In Schritt 804 erfolgt das Festlegen der Zeitangabe 123 sowie mindestens eines limitierenden Attributs 125. Zudem wird die Auswahl mindestens eines Identifikators 124 getroffen. In Schritt 806 wird nach Festlegung bzw. Auswahl aller für die Erstellung des Zertifikats 104 notwendigen Angaben das entsprechende Zertifikat 104 angefordert, In Schritt 807 werden die in Schritt 804 gemachten Angaben 123 bis 125 von dem zweiten Gerät 102 an das erste Gerät 101 übertragen. In Schritt 808 erzeugt das erste Gerät ein kryptografisches Schlüsselpaar bestehend aus einem zweiten privaten Schlüssel 107 und einem zweiten öffentlichen Schlüssel 108. In Schritt 810 wird ein Datensatz 126 bestehend aus dem zweiten öffentlichen Schlüssel 108 sowie den in Schritt 807 übertragenen Parametern 123 und 125 erstellt, zudem wird auf Basis des Auswahlsignals für zumindest einen Identifikator 124 der entsprechend ausgewählte Identifikator aus dem geschützten Speicherbereich 111 hinzugefügt. In Schritt 812 wird ein Hash-Wert des Datensatzes 126 erstellt, der in Schritt 814 mit dem ersten privaten Schlüssel 105 signiert wird. In Schritt 816 wird die so erstellte erste Signatur 127 an den Datensatz 126 angefügt, womit das zweite Zertifikat 104 erstellt ist. In Schritt 818 werden schließlich das zweite Zertifikat 104 und der zweite private Schlüssel 107 von dem ersten Gerät 101 über die Kommunikationsschnittstellen 118 und 119 an das zweite Gerät 102 übertragen.

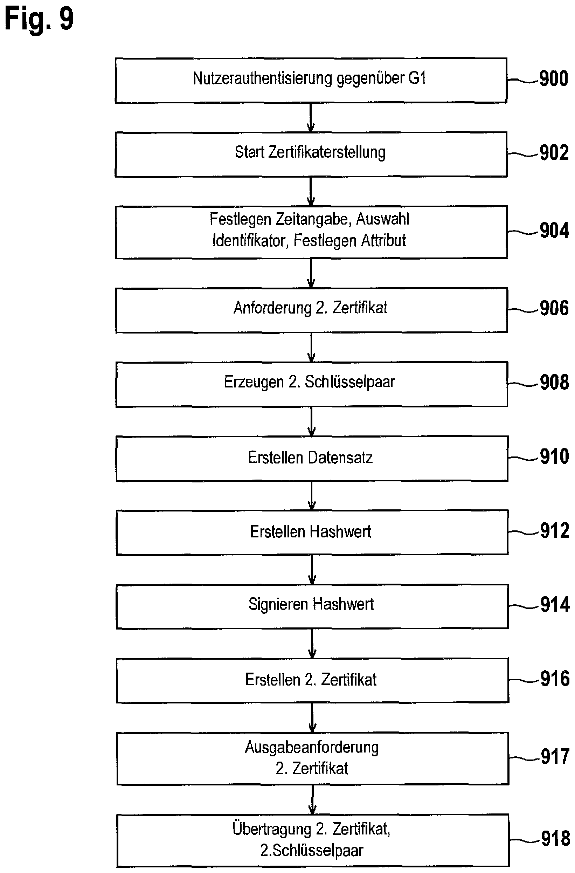

In Figur 9 ist ein Flussdiagramm für die zweite Ausführungsform eines erfindungsgemäßen Verfahrens gemäß Figur 6 gezeigt. In Schritt 900 erfolgt die Authentisierung des Nutzers 100 gegenüber dem ersten Gerät 101. In Schritt 902 werden die Programmabläufe zur Erstellung eines abgeleiteten Zertifikats 104 gestartet. In Schritt 904 werden von dem Nutzer 100 die hierfür notwendigen Angaben bezüglich Zeiteingabe 123, Identifikator 124 und limitierenden Attribut 125 vorgenommen. In Schritt 906 wird ein abgeleitetes zweites Zertifikat angefordert. In Schritt 908 erzeugt das Gerät 101 daraufhin als Antwort ein kryptografisches Schlüsselpaar bestehend aus einem zweiten privaten Schlüssel 107 und einem zweiten öffentlichen Schlüssel 108. In Schritt 910 wird ein Datensatz 126 mit den vom Nutzer 100 in Schritt 904 gemachten Angaben erstellt. Zudem umfasst der Datensatz 126 den zweiten öffentlichen Schlüssel 108. Von diesem Datensatz 126 bildet das erste Gerät 101 in Schritt 912 einen Hash-Wert, der in Schritt 914 mit dem ersten privaten Schlüssel 105 signiert wird. Die so erstellte erste Signatur 127 wird in Schritt 916 zur Erstellung des zweiten Zertifikats 104 an den Datensatz 126 angehängt. In Schritt 917 erfolgt eine Ausgabeanforderung des Nutzers 100 an das Gerät 101, woraufhin dieses Gerät eine Datenverbindung mit dem zweiten Gerät 102 herstellt und in Schritt 908 das abgeleitete zweite Zertifikat 104 sowie den zweiten privaten Schlüssel 107 an das zweite Gerät 102 überträgt.

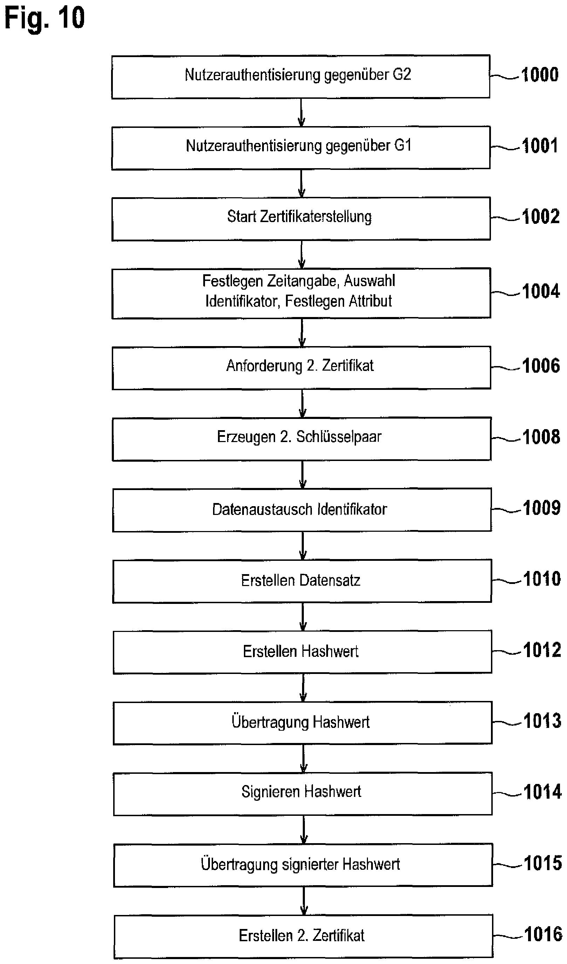

In Figur 10 ist schließlich ein Flussdiagramm für die dritte Ausführungsform des erfindungsgemäßen Verfahrens, wie es in Figur 7 dargestellt ist, zu sehen. In Schritt 1000 erfolgt die Authentisierung des Nutzers 100 gegenüber dem zweiten Gerät 102 und in Schritt 1001 die Authentisierung gegenüber dem ersten Gerät 101. In Schritt 1002 werden von dem Nutzer 100 die Programmabläufe zur Erstellung eines abgeleiteten Zertifikats 104 gestartet. In Schritt 1004 liegt der Nutzer 100 eine Zeiteingabe 123 und mindestens eines limitierendes Attributs 125 fest. Zudem trifft der Nutzer 100 eine Auswahl für mindestens einen Identifikator 124. In Schritt 1006 fordert der Nutzer 100 ein abgeleitetes Zertifikat 104 auf Basis der von ihm in Schritt 1004 gemachten Angaben an. In Schritt 1008 erzeugt das zweite Gerät 102 in Antwort auf diese Anforderung ein kryptografisches Schlüsselpaar, welches einen zweiten privaten Schlüssel 107 und einen zweiten öffentlichen Schlüssel 108 umfasst. Das Auswahlsignal für einen Identifikator 124 aus Schritt 1004 wird in Schritt 1009 an das erste Gerät 101 übertragen, welches in Antwort auf das Auswahlsignal mittels der Kommunikationsschnittstellen 118 und 119 den entsprechenden Identifikator 124 aus dem geschützten Speicherbereich 111 des ersten Speichers 109 an das zweite Gerät 102 übermittelt. In Schritt 1010 erstellt das zweite Gerät 102 einen Datensatz 126, welcher die Zeitangabe 123, mindestens einen Identifikator 124 und mindestens ein limitierendes Attribut 125 sowie den zweiten öffentlichen Schlüssel 108 umfasst. Von diesem Datensatz 126 wird in Schritt 1012 ein Hash-Wert erzeugt, der in Schritt 1013 von dem zweiten Gerät 102 an das erste Gerät 101 mittels der Kommunikationsschnittstellen 118 und 119 übertragen und in Schritt 1014 auf dem ersten Gerät 101 mit dem ersten privaten Schlüssel 105 signiert wird. Dieser signierte Hash-Wert wird in Schritt 1015 von dem ersten Gerät 101 an das zweite Gerät 102 zurückübertragen, woraufhin das zweite Gerät 102 schließlich im Schritt 1016 ein abgeleitetes zweites Zertifikat 104 erstellt, indem es den signierten Hash-Wert an den in Schritt 1010 erstellten Datensatz 126 anfügt.

### Bezugszeichenliste

- 100: Nutzer
- 101: erstes Gerät
- 102: zweites Gerät
- 103: erstes Zertifikat
- 104: zweites Zertifikat
- 105: erster privater Schlüssel
- 106: erster öffentlicher Schlüssel
- 107: zweiter privater Schlüssel
- 108: zweiter öffentlicher Schlüssel
- 109: erster Speicher
- 110: zweiter Speicher
- 111: geschützter Speicherbereich
- 112: erster Prozessor
- 113: zweiter Prozessor
- 114: Programminstruktionen
- 115: Programminstruktionen
- 116: Programminstruktionen
- 117: Programminstruktionen
- 118: erste Kommunikationsschnittstelle
- 119: zweite Kommunikationsschnittstelle
- 120: Kommunikationsschnittstelle
- 121: Eingabevorrichtung
- 122: Anzeigevorrichtung
- 121': zweite Eingabevorrichtung
- 122': zweite Anzeigevorrichtung
- 123: Zeitangabe
- 124: Identifikator
- 125: Attribut
- 126: Datensatz
- 127: erste Signatur
- 128: zweite Signatur
- 129: Zertifizierungsstelle
- 130: Dienst-Computersystem
- 131: Bestellung
- 132: erstes Betriebssystem
- 133: zweites Betriebssystem
- 134: Netzwerkprotokolle

## Patentansprüche

1. Verfahren zur Erzeugung eines von einem ersten Zertifikat (103) einer Dokumenten-PKI abgeleiteten zweiten Zertifikats (104) mit einem ersten tragbaren Gerät (101) und einem zweiten Gerät (102), wobei das erste Zertifikat (103) einem Nutzer (100) zugeordnet ist und einen ersten öffentlichen Schlüssel (106) beinhaltet, dem ein erster privater Schlüssel (105) zugeordnet ist,
wobei das erste Gerät (101) einen nichtflüchtigen elektronischen Speicher (109) mit einem geschützten Speicherbereich (111) aufweist, in dem zumindest ein Identifikator (124) und der erste private Schlüssel (105) des ersten Zertifikats (103) der Dokumenten-PKI gespeichert sind, wobei ein Zugriff auf den geschützten Speicherbereich (111) nur über einen ersten Prozessor (112) des ersten Geräts (101) möglich ist, und wobei das erste Gerät (101) eine erste Kommunikationsschnittstelle (118) zur Kommunikation mit dem zweiten Gerät (102) aufweist,
wobei das zweite Gerät (102) eine zweite Kommunikationsschnittstelle (119) zur Kommunikation mit dem ersten Gerät (101) aufweist, und
wobei das Verfahren folgende Schritte umfasst:
- Authentisierung des Nutzers (100) gegenüber dem ersten Gerät (101),
- Festlegen einer Zeitangabe (123) für das abgeleitete zweite Zertifikat (104) durch das zweite Gerät (102),
- Auswahl mindestens eines dem Nutzer (100) zugeordneten Identifikators (124) aus dem geschützten Speicherbereich (111) des ersten Geräts (101) für das abgeleitete zweite Zertifikat (104),
- Festlegen mindestens eines eine Verwendbarkeit des abgeleiteten zweiten Zertifikats (104) limitierenden Attributs (125) durch das zweite Gerät (102),
- Erzeugen eines kryptographischen Schlüsselpaares für das abgeleitete zweite Zertifikat (104) umfassend einen zweiten privaten Schlüssel (107) und einen zweiten öffentlichen Schlüssel (108) mittels des ersten Prozessors (112) des ersten Geräts (101),
- Erzeugen eines Datensatzes (126), umfassend den erzeugten zweiten öffentlichen Schlüssel (108), die Zeitangabe (123), den mindestens einen Identifikator (124) und das mindestens eine limitierende Attribut (125),
- Erstellen einer Signatur (127) für den Datensatz (126) mit dem ersten privaten Schlüssel (105) des ersten Zertifikats (103) durch das erste Gerät (101),
- Übertragen der Signatur (127) vom ersten Gerät (101) zum zweiten Gerät (102) über die erste und zweite Kommunikationsschnittstelle (118, 119) zur Bereitstellung des abgeleiteten zweiten Zertifikats (104) in Form des Datensatzes (126) mit Signatur (127) auf dem zweiten Gerät (102), und
- Übertragen des zweiten privaten Schlüssels (107) des abgeleiteten zweiten Zertifikats (104) vom ersten Gerät (101) zum zweiten Gerät (102) über die erste und zweite Kommunikationsschnittstelle (118, 119).

2. Verfahren nach Anspruch 1, wobei die Zeitangabe (123), ein den mindestens einen ausgewählten Identifikator (124) angebendes Auswahlsignal und das mindestens eine limitierende Attribut (125) von dem zweiten Gerät (102) auf das erste Gerät (101) übertragen werden und der Datensatz (126), welcher den erzeugten zweiten öffentlichen Schlüssel (108), die Zeitangabe (123), den mindestens einen Identifikator (124) und das mindestens eine limitierende Attribut (125) beinhaltet, auf dem ersten Gerät (101) erzeugt wird.

3. Verfahren nach Anspruch 1, wobei der mindestens eine ausgewählte Identifikator (124) und der erzeugte zweite öffentliche Schlüssel (108) von dem ersten Gerät (101) auf das zweite Gerät (102) übertragen werden und der Datensatz (126), welcher den erzeugten zweiten öffentlichen Schlüssel (108), die Zeitangabe (123), den mindestens einen Identifikator (124) und das mindestens eine limitierende Attribut (125) beinhaltet, auf dem zweiten Gerät (102) erzeugt wird.

4. Verfahren nach Anspruch 2, wobei der Datensatz (126) nach dem Erstellen der Signatur (127) von dem ersten Gerät (101) auf das zweite Gerät (102) übertragen wird.

5. Verfahren nach Anspruch 3, wobei der erzeugte Datensatz (126) zum Erstellen der Signatur (127) auf das erste Gerät (101) übertragen und nach dem Erstellen der Signatur (127) von dem ersten Gerät (101) zurück auf das zweite Gerät (102) übertragen wird.
Verfahren nach Anspruch 3, wobei auf dem zweiten Gerät (102) ein Hash-Wert des erzeugten Datensatzes (126) erzeugt, der Hash-Wert auf das erste Gerät (101) übertragen wird und das Erstellen der Signatur (127) für den Datensatz (126) durch Signieren des Hash-Wertes, Zurückübertragen des signierten Hash-Werts von dem ersten Gerät (101) auf das zweite Gerät (102) und Hinzufügen des signierten Hash-Werts als Signatur (127) zu dem Datensatz (126) auf dem zweiten Gerät (102) erfolgt

6. Verfahren nach einem der vorhergehenden Ansprüche, wobei eine Mehrzahl von limitierenden Attributen (125) für das zweite Zertifikat (104) festgelegt wird und/oder
wobei zumindest eines der festgelegten limitierenden Attribute (125) ein maximaler Geldbetrag, ein Dienstleister, eine Ware und/oder eine Dienstleistung ist, und/oder
wobei eine Mehrzahl von Identifikatoren (124) aus dem geschützten Speicherbereich (111) des ersten Geräts (101) für das zweite Zertifikat (104) ausgewählt wird, und/oder
wobei das zweite Gerät (102) eine Eingabevorrichtung (121) und eine Anzeigevorrichtung (122) zum Festlegen der Zeitangabe (123) und des mindestens einen limitierenden Attributs (125) sowie zur Auswahl des mindestens einen Identifikators (124) aufweist.

7. Verfahren nach einem der vorhergehenden Ansprüche, wobei das erste Gerät (101) ein integraler Bestandteil des zweiten Geräts (102) ist, sodass das erste Gerät (101) aus dem zweiten Gerät (102) nicht zerstörungsfrei ausbaubar ist, und die Kommunikationsschnittstellen (118, 119) zur Kommunikation zwischen den beiden Geräten (101, 102) interne Busschnittstellen sind.

8. Verfahren nach einem der Ansprüche 1 bis 7, wobei das Verfahren zusätzlich folgende Schritte umfasst:
- Empfangen eines mit dem zweiten Zertifikat (104) zu signierenden Datensatzes (126) auf dem zweiten Gerät (102),
- Signieren des empfangenen Datensatzes (126) mit dem zweiten privaten Schlüssel (107) des zweiten Zertifikats (104),
- Ausgeben des signierten Datensatzes (126) und des zweiten Zertifikats (104) aus dem zweiten Gerät (102).

9. Verfahren nach einem der Ansprüche 1 bis 8, wobei das abgeleitete zweite Zertifikat (104) von dem zweiten Gerät (102) zusammen mit dem zweiten privaten Schlüssel (107) des zweiten Zertifikats (104) ausgegeben wird.

10. Verfahren nach einem der vorhergehenden Ansprüche, wobei das zweite Gerät (102) vor dem Festlegen der limitierenden Attribute (125) eine Attributspezifikation empfängt und das Festlegen der Attribute (125) durch Auswahl aus einer durch die Attributspezifikation vordefinierten Gruppe von Attributen (125) erfolgt.

11. Verfahren nach einem der Ansprüche 8 bis 10, wobei das zweite Gerät (102) eine weitere Kommunikationsschnittstelle (120) zur Kommunikation mit einem Dienst-Computersystem (130) aufweist, die als kontaktbehafteten oder kontaktlosen Schnittstelle zum Empfang eines mit dem zweiten Zertifikat (104) zu signierenden Datensatzes (126), zur Ausgabe des zweiten Zertifikats (104) zusammen mit dem zweiten privaten Schlüssel (107) und/oder zum Empfang einer Attributspezifikation konfiguriert ist, insbesondere eine kontaktbehaftete USB- oder Netzwerkschnittstelle oder eine kontaktlose Schnittstelle nach einem RFID- und/oder NFC-Standard oder WLAN-, Mobilfunk- oder Internet-Standard.

12. Verfahren nach einem der vorhergehenden Ansprüche, wobei das erste Gerät (101) ein Dokument ist, insbesondere ein Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder ein Firmenausweis, oder ein anderes ID-Dokument, eine Chipkarte, ein Zahlungsmittel, insbesondere Banknote, Bankkarte oder Kreditkarte, Frachtbrief oder ein sonstiger Berechtigungsnachweis, und/oder wobei das zweite Gerät (102) ein Telekommunikationsgerät ist, insbesondere ein Smartphone.

13. Verfahren zum Prüfen einer mit einem abgeleiteten Zertifikat (104) erstellten Signatur (128), wobei das abgeleitete Zertifikat (104) mit einem Verfahren gemäß einem der vorhergehenden Ansprüche erzeugt wurde und das Verfahren zum Prüfen der Signatur (128) folgende Schritte umfasst:
- Prüfen, ob ein Datensatz (130) mit dem abgeleiteten zweiten Zertifikat (104) signiert wurde,
- Prüfen der Gültigkeit der Zeitangabe (123), der Indentifikatoren (124) und der Attribute (125) des zweiten Zertifikats (104) für den signierten Datensatz (130),
- Prüfen, ob das zweite Zertifikat (104) mit dem ersten Zertifikat (103) signiert wurde,
- Prüfen der Gültigkeit des ersten Zertifikats (103) für die Zeitangabe (123), Indentifikatoren (124) und Attribute (125) des zweiten Zertifikats (104),
- Prüfen der Gültigkeit des ersten Zertifikats (103) anhand von dessen Dokumenten-PKI.

14. Elektronisches System, welches ein erstes und ein zweites Gerät (101, 102) aufweist und dazu konfiguriert ist ein Verfahren nach einem der Ansprüche 1 bis 13 auszuführen.

## Claims

1. A method for generating a second certificate (104) derived from a first certificate (103) of a document PKI using a first portable device (101) and a second device (102), the first certificate (103) being associated with a user (100) and containing a first public key (106) with which a first private key (105) is associated,
the first device (101) comprising a non-volatile electronic memory (109) including a protected memory area (111) in which at least one identifier (124) and the first private key (105) of the first certificate (103) of the document PKI are stored, access to the protected memory area (111) only being possible via a first processor (112) of the first device (101), and the first device (101) comprising a first communication interface (118) for communicating with the second device (102),
the second device (102) comprising a second communication interface (119) for communicating with the first device (101), and
the method comprising the following steps:
- authenticating the user (100) with respect to the first device (101);
- establishing time information (123) for the derived second certificate (104) by the second device (102);
- selecting at least one identifier (124) associated with the user (100) from the protected memory area (111) of the first device (101) for the derived second certificate (104);
- establishing at least one attribute (125) limiting a usability of the derived second certificate (104) by the second device (102);
- generating a cryptographic key pair for the derived second certificate (104), comprising a second private key (107) and a second public key (108), by means of the first processor (112) of the first device (101);
- generating a data set (126), comprising the generated second public key (108), the time information (123), the at least one identifier (124) and the at least one limiting attribute (125);
- creating a signature (127) for the data set (126) with the first private key (105) of the first certificate (103) by the first device (101);
- transmitting the signature (127) from the first device (101) to the second device (102) via the first and second communication interfaces (118, 119) for providing the derived second certificate (104) in the form of the data set (126) with the signature (127) on the second device (102); and
- transmitting the second private key (107) of the derived second certificate (104) from the first device (101) to the second device (102) via the first and second communication interfaces (118, 119).

2. The method according to claim 1, wherein the time information (123), a selection signal indicating the at least one selected identifier (124) and the at least one limiting attribute (125) are transmitted from the second device (102) to the first device (101), and the data set (126), which includes the generated second public key (108), the time information (123), the at least one identifier (124) and the at least one limiting attribute (125), is generated on the first device (101).

3. The method according to claim 1, wherein the at least one selected identifier (124) and the generated second public key (108) are transmitted from the first device (101) to the second device (102), and the data set (126), which includes the generated second public key (108), the time information (123), the at least one identifier (124) and the at least one limiting attribute (125), is generated on the second device (102).

4. The method according to claim 2, wherein the data set (126) is transmitted from the first device (101) to the second device (102) after the creation of the signature (127).

5. The method according to claim 3, wherein the generated data set (126) is transmitted to the first device (101) for the creation of the signature (127), and is transmitted from the first device (101) back to the second device (102) after the creation of the signature (127).
The method according to claim 3, wherein a hash value of the generated data set (126) is generated on the second device (102), the hash value is transmitted to the first device (101), and the signature (127) for the data set (126) is created by signing of the hash value, transmission of the signed hash value from the first device (101) back to the second device (102) and addition of the signed hash value as a signature (127) to the data set (126) on the second device (102).

6. The method according to any one of the preceding claims, wherein a plurality of limiting attributes (125) is established for the second certificate (104), and/or
at least one of the established limiting attributes (125) is a maximum sum of money, a service provider, a product and/or a service, and/or
a plurality of identifiers (124) is selected from the protected memory area (111) of the first device (101) for the second certificate (104), and/or
the second device (102) comprises an input device (121) and a display device (122) for establishing the time information (123) and the at least one limiting attribute (125) and for selecting the at least one identifier (124).

7. The method according to any one of the preceding claims, wherein the first device (101) is an integral part of the second device (102), so that the first device (101) cannot be removed from the second device (102) without destruction, and the communication interfaces (118, 119) for the communication between the two devices (101, 102) are internal bus interfaces.

8. The method according to any one of claims 1 to 7, the method additionally comprising the following steps:
- receiving a data set (126) to be signed with the second certificate (104) on the second device (102);
- signing the received data set (126) with the second private key (107) of the second certificate (104); and
- outputting the signed data set (126) and the second certificate (104) from the second device (102).

9. The method according to any one of claims 1 to 8, wherein the derived second certificate (104) is output by the second device (102) together with the second private key (107) of the second certificate (104).

10. The method according to any one of the preceding claims, wherein the second device (102) receives an attribute specification prior to the establishment of the limiting attributes (125), and the attributes (125) are established by selection from a group of attributes (125) predefined by the attribute specification.

11. The method according to any one of claims 8 to 10, wherein the second device (102) comprises a further communication interface (120) for communicating with a service computer system (130), which is configured as a contact or contactless interface for receiving a data set (126) to be signed with the second certificate (104), for outputting the second certificate (104) together with the second private key (107) and/or for receiving an attribute specification, in particular a contact USB or network interface or a contactless interface according to an RFID and/or NFC standard or WLAN, mobile communication or Internet standard.

12. The method according to any one of the preceding claims, wherein the first device (101) is a document, in particular a value or security document, in particular a document from a governing body, in particular a paper-based and/or plastic-based document, such as an electronic identification document, in particular a passport, an identification card, a visa, a driver's license, a vehicle registration, a vehicle title, a health insurance card or a company ID card, or another ID document, a chip card, a payment instrument, in particular a bank note, a bank card or a credit card, a bill of lading or other proof of authority, and/or the second device (102) is a telecommunications device, in particular a smart phone.

13. A method for checking a signature (128) created with a derived certificate (104), the derived certificate (104) having been generated by a method according to any one of the preceding claims, and the method for checking the signature (128) comprising the following steps:
- checking whether a data set (130) was signed with the derived second certificate (104);
- checking the validity of the time information (123), the identifiers (124) and the attributes (125) of the second certificate (104) for the signed data set (130);
- checking whether the second certificate (104) was signed with the first certificate (103);
- checking the validity of the first certificate (103) for the time information (123), the identifiers (124) and the attributes (125) of the second certificate (104); and
- checking the validity of the first certificate (103) based on the document PKI thereof.

14. An electronic system, comprising a first and a second device (101, 102) and being configured to carry out a method according to any one of claims 1 to 13.

## Revendications

1. Procédé de création d'un deuxième certificat (104) dérivé d'un premier certificat (103) d'une infrastructure à clés publiques ICP de documents, avec un premier appareil (101) portable et un deuxième appareil (102), où le premier certificat (103) est associé à un utilisateur (100) et contient une première clé publique (106), à laquelle est associée une première clé privée (105),
dans lequel le premier appareil (101 présente une mémoire (109) électronique non volatile avec une zone de mémoire (111) protégée, dans laquelle sont stockés au moins un identificateur (124) et la première clé privée (105) du premier certificat (103) de l'ICP de documents, où un accès à la zone de mémoire (111) protégée n'est possible que par le biais d'un premier processeur (112) du premier appareil (101), et où le premier appareil (101) présente une première interface de communication (118) pour la communication avec le deuxième appareil (102),
dans lequel le deuxième appareil (102) présente un deuxième interface de communication (119) pour la communication avec le premier appareil (101), et où le procédé comprend les étapes suivantes :
- l'authentification de l'utilisateur (100) vis-à-vis du premier appareil (101),
- la définition d'une indication horaire (123) pour le deuxième certificat (104) dérivé par le deuxième appareil (102),
- la sélection d'au moins un identificateur (124) associé à l'utilisateur (100) à partir de la zone de mémoire (111) protégée du premier appareil (101) pour le deuxième certificat (104) dérivé,
- la définition au moins un attribut (125) de limitation d'une applicabilité du deuxième certificat (104) dérivé par le deuxième appareil (102),
- la création d'une paire de clés cryptographiques pour le deuxième certificat (104) dérivé comprenant une deuxième clé privée (107) et une deuxième clé publique (108) au moyen du premier processeur (112) du premier appareil (101),
- la création d'un ensemble de données (126) comprenant la deuxième clé publique (108) créée, l'indication horaire (123), l'au moins un identificateur (124) et l'au moins un attribut (125) de limitation,
- l'établissement d'une signature (127) pour l'ensemble de données (126) avec la première clé privée (105) du premier certificat (103) par le premier appareil (101),
- la transmission de la signature (127) du premier appareil (101) vers le deuxième appareil (102) par le biais de la première et de la deuxième interface de communication (118, 119) pour la préparation du deuxième certificat (104) dérivé sous la forme d'un ensemble de données (126) avec la signature (127) sur le deuxième appareil (102), et
- la transmission de la deuxième clé privée (107) du deuxième certificat (104) dérivé à partir du premier appareil (101) vers le deuxième appareil (102) par le biais de la première et de la deuxième interface de communication (118, 119).

2. Procédé selon la revendication 1, dans lequel l'indication horaire (123), au moins un signal de sélection indiquant l'identificateur (124) sélectionné et l'au moins un attribut (125) de limitation sont transmis du deuxième appareil (102) vers le premier appareil (101), et l'ensemble de données (126), lequel contient la deuxième clé publique (108) créée, l'indication horaire (123), l'au moins un identificateur (124) et l'au moins un attribut (125) de limitation, est créé sur le premier appareil (101).

3. Procédé selon la revendication 1, dans lequel l'au moins un identificateur (124) sélectionné et la deuxième clé publique (108) créée sont transmis du premier appareil (101) vers le deuxième appareil (102) et l'ensemble de données (126), lequel contient la deuxième clé publique (108) créée, l'indication horaire (123), l'au moins un identificateur (124) et l'au moins un attribut (125) de limitation, est créé sur le deuxième appareil (102).

4. Procédé selon la revendication 2, dans lequel l'ensemble de données (126) est transmis du premier appareil (101) vers le deuxième appareil (102) après l'établissement de la signature (127).

5. Procédé selon la revendication 3, dans lequel l'ensemble de données (126) créé est transmis sur le premier appareil (101) pour l'établissement de la signature (127) et est retransmis du premier appareil (101) vers le deuxième appareil (102) après l'établissement de la signature (127).
Procédé selon la revendication 3, dans lequel une valeur de hachage de l'ensemble de données (126) créé est générée sur le deuxième appareil (102), la valeur de hachage est transmise sur le premier appareil (101), et l'établissement de la signature (127) pour l'ensemble de données (126) par la signature de la valeur de hachage, la retransmission de la valeur de hachage signée du premier appareil (101) vers le deuxième appareil (102) et l'ajout de la valeur de hachage signée servant de signature (127) à l'ensemble de données (126) ont lieu sur le deuxième appareil (102)

6. Procédé selon l'une des revendications précédentes, dans lequel une multiplicité d'attributs (125) de limitation est fixée pour le deuxième certificat (104) et/ou dans lequel au moins un des attributs (125) de limitation est un montant d'argent maximal, un prestataire de service, un produit et/ou une prestation de service, et/ou dans lequel une multiplicité d'identificateurs (124) est sélectionnée pour le deuxième certificat (104) à partir de la zone de mémoire (111) protégée du premier appareil (101), et/ou
dans lequel le deuxième appareil (102) présente un dispositif de saisie (121) et un dispositif d'affichage (122) pour la définition de l'indication horaire (123) et de l'au moins un attribut (125) de limitation, ainsi que pour la sélection de l'au moins un identificateur (124).

7. Procédé selon l'une des revendications précédentes, dans lequel le premier appareil (101) est un composant intégral du deuxième appareil (102) de sorte que le premier appareil (101) ne peut pas être démonté du deuxième appareil (102) sans occasionner de dégâts, et les interfaces de communication (118, 119) pour la communication entre les deux appareils (101, 102) sont des interfaces de bus internes.

8. Procédé selon l'une des revendications 1 à 7, où le procédé comprend en outre les étapes suivantes :
- la réception d'un ensemble de données (126) devant être signé avec le deuxième certificat (104) sur le deuxième appareil (102),
- la signature de l'ensemble de données (126) réceptionné avec la deuxième clé privée (107) du deuxième certificat (104),
- l'émission de l'ensemble de données (126) signé et du deuxième certificat (104) à partir du deuxième appareil (102).

9. Procédé selon l'une des revendications 1 à 8, dans lequel le deuxième certificat (104) dérivé est émis à partir du deuxième appareil (102) conjointement avec la deuxième clé privée (107) du deuxième certificat (104).

10. Procédé selon l'une des revendications précédentes, dans lequel le deuxième appareil (102) réceptionne une spécification d'attribut avant la définition des attributs (125) de limitation et la définition des attributs (125) a lieu par une sélection dans un groupe d'attributs (125) prédéfinis par la spécification d'attributs.

11. Procédé selon l'une des revendications 8 à 10, dans lequel le deuxième appareil (102) présente une interface de communication (120) supplémentaire, pour la communication avec un système informatique de service (130), qui est configurée sous forme d'interface à contact ou sans contact pour la réception d'un ensemble de données (126) devant être signé avec le deuxième certificat (104) en vue de l'émission du deuxième certificat (104), conjointement avec la deuxième clé privée (107), et/ou pour la réception d'une spécification d'attribut, notamment une interface USB à contact ou de réseau ou une interface sans contact d'après une norme RFID et/ou NFC ou une norme NFC ou une norme WLAN, radio mobile ou internet.

12. Procédé selon l'une des revendications précédentes, dans lequel le premier appareil (101) est un document, notamment un document de valeur ou de sécurité, en particulier, un document de souveraineté, en particulier, un document à base de papier et/ou de matière plastique, comme, par exemple, un document d'identité électronique, notamment un passeport, une carte d'identité, un visa, un permis de conduire, une immatriculation de véhicule, un document d'enregistrement de véhicule, une carte de santé ou une carte d'entreprise, ou un autre document d'ID, une carte à puce, un moyen de paiement, notamment un billet de banque, une carte bancaire ou une carte de crédit, un connaissement ou un autre document d'autorisation, et/ou
dans lequel le deuxième appareil (102) est un appareil de télécommunication, notamment un Smartphone.

13. Procédé de vérification d'une signature (128) établie avec un certificat (104) dérivé, dans lequel le certificat (104) dérivé a été créé avec un procédé selon l'une des revendications précédentes et le procédé de vérification de la signature (128) comprend les étapes suivantes :
- la vérification si un ensemble de données (130) a été signé avec le deuxième certificat (104) dérivé,
- la vérification de la validité de l'indication horaire (123), des identificateurs (124) et des attributs (125) du deuxième certificat (104) pour l'ensemble de données (130) signé,
- la vérification si le deuxième certificat (104) a été signé avec le premier certificat (103),
- la vérification de la validité du premier certificat (103) pour l'indication horaire (123), d'identificateurs (124) et d'attributs (125) du deuxième certificat (104),
- la vérification de la validité du premier certificat (103) à l'aide de son ICP de documents.

14. Système électronique, lequel présente un premier et un deuxième appareil (101, 102) et est configuré pour exécuter un procédé selon l'une des revendications 1 à 13.
